# EUROPEAN PATENT APPLICATION

(11) **EP 4 485 979 A1**
(43) Date of publication of application: **01.01.2025**
(21) Application number: 23777720.6
(22) Date of filing: 25.02.2023
(51) Int. Cl.: H04W 4/02

(54) **MEASUREMENT METHOD AND MEASUREMENT APPARATUS**

(30) Priority: 28.03.2022 CN 202210311943
(71) Applicant: Huawei Technologies Co., Ltd., Shenzhen, Guangdong 518129 (CN)
(72) Inventor: NAREN, Gerile, Shenzhen, Guangdong 518129 (CN); HAN, Xiao, Shenzhen, Guangdong 518129 (CN); HU, Mengshi, Shenzhen, Guangdong 518129 (CN); DU, Rui, Shenzhen, Guangdong 518129 (CN); YU, Jian, Shenzhen, Guangdong 518129 (CN); LI, Yunbo, Shenzhen, Guangdong 518129 (CN); LIU, Chenchen, Shenzhen, Guangdong 518129 (CN)
(74) Representative: MERH-IP Matias Erny Reichl Hoffmann Patentanwälte PartG mbB
(86) International application number: PCT/CN2023/078296
(87) International publication number: WO 2023/185342

(57) **Abstract**

This application relates to the field of wireless communication technologies, and in particular, to a measurement method and a measurement apparatus. The method may be applied to a wireless local area network system of 802.11 series protocols such as 802.11be, Wi-Fi 7, EHT, Wi-Fi 8, 802.11bf, SENSING, and the like. The method includes: A first device receives a sensing measurement result and a ranging measurement result from a second device. The first device receives null data packets NDPs transmitted between the second device and a third device. The first device determines a first ranging measurement result of the first device based on the ranging measurement result and the NDPs. The first device may be an SBP initiator or a PSTA. According to embodiments of this application, an SBP procedure may be combined with a passive ranging procedure, so that the SBP initiator can implement sensing and/or passive ranging, and the PSTA can transparently participate in a sensing by proxy measurement process and complete passive ranging.

## Description

This application claims priority to Chinese Patent Application No. 202210311943.0, filed with the China National Intellectual Property Administration on March 28, 2022 and entitled "MEASUREMENT METHOD AND MEASUREMENT APPARATUS", which is incorporated herein by reference in its entirety.

### TECHNICAL FIELD

This application relates to the field of wireless communication technologies, and in particular, to a measurement method and a measurement apparatus.

### BACKGROUND

With rapid development of mobile communication and Internet technologies, people have increasing demands for sensing (Sensing) services and ranging (Ranging) services based on wireless local area networks (wireless local area networks, WLANs). Sensing is to use currently widely deployed WLAN infrastructure (for example, a WLAN device or an access point (access point, AP)) and/or a station (non-AP station, non-AP STA) to send a null data packet (null data packet, NDP) used for sensing to sense a surrounding environment, and use a specific algorithm to extract a corresponding parameter from a received signal for analysis to obtain related information (that is, a sensing measurement result) in the surrounding environment. Ranging means that two communication parties implement measurement for a distance (briefly referred to as ranging) between two devices by sending NDPs used for ranging, to perform high-precision location estimation.

Sensing by proxy (Sensing by proxy, SBP) measurement means that a non-AP STA sends a proxy request to request an AP to initiate a sensing procedure on behalf of the non-AP STA, and the AP feeds back a sensing measurement result between the AP and another non-AP STA (that is, a station participating in NDP transmission) to the non-AP STA initiating the proxy request, so that the non-AP STA can sense a surrounding environment. In a passive ranging process, if a non-AP STA, referred to as a passive station (Passive STA, PSTA), wants to obtain its own location based on a ranging procedure between an AP and another non-AP STA. The PSTA listens to an NDP that is used for ranging and that is transmitted between the AP and the another non-AP STA (a station participating in NDP sending). In addition, after the AP completes ranging with the another non-AP STA (the station participating in NDP sending), the AP sends a ranging trigger location measurement report frame (TF Ranging LMR) to the another non-AP STA. After receiving the frame, the another non-AP STA feeds back a ranging result on the non-AP STA side to the AP. In this case, the AP may send a ranging result between the AP and the another non-AP STA to the PSTA through broadcast, and then the PSTA obtains its own location based on a listening result of the PSTA. Currently, in a conventional technology, how to combine an SBP procedure with a passive ranging procedure is not discussed, and specific details of combining the SBP procedure with the passive ranging procedure are not discussed.

### SUMMARY

This application provides a measurement method and apparatus, and a device. In the method, an SBP procedure may be combined with a passive ranging procedure, so that a device initiating SBP can implement sensing and/or passive ranging, and a passive ranging device can transparently participate in a sensing by proxy measurement process and complete passive ranging.

The following describes this application from different aspects. It should be understood that, mutual reference may be made to implementations and beneficial effects of the following different aspects.

According to a first aspect, this application provides a measurement method. The method includes:
A first device receives a sensing measurement result and a ranging measurement result from a second device;
the first device receives null data packets NDPs transmitted between the second device and a third device; and
the first device determines a first ranging measurement result of the first device based on the ranging measurement result and the NDPs.

In this application, the first device may be a non-AP STA initiating SBP. The second device may be an AP. The third device may be another non-AP STA (for example, a sensing device and/or a ranging device) participating in sensing measurement, that is, a device that transmits, with the AP, an NDP used for sensing and ranging. The first device receives the sensing measurement result and the ranging measurement result, and listens to the null data packets NDPs transmitted between the second device and the third device, to determine a location of the first device based on a listening result and the received ranging measurement result. In this way, an SBP procedure may be combined with a passive ranging procedure, so that the device (that is, the first device) initiating SBP can implement sensing and/or passive ranging. The first device may implement positioning of the first device and the like based on the first ranging measurement result. This is not limited herein.

In a possible implementation, the method further includes:
The first device sends a proxy request to the second device, where the proxy request is used to request the second device to perform sensing measurement and ranging measurement on behalf of the first device.

In a possible implementation, the sensing measurement result includes channel state information CSI.

In a possible implementation, that the first device determines a first ranging measurement result of the first device based on the ranging measurement result and the NDPs includes:
The first device determines the first ranging measurement result of the first device based on the ranging measurement result and receiving time of the NDPs.

In a possible implementation, the sensing measurement result and the ranging measurement result are carried in a same frame.

Alternatively, the sensing measurement result and the ranging measurement result are carried in different frames.

In this application, the sensing measurement result and the ranging measurement result are carried in a same frame, so that signaling overheads can be reduced, and device power consumption can be reduced. The sensing measurement result and the ranging measurement result are carried in different frames, so that procedure decoupling in a result feedback phase can be implemented.

In a possible implementation, the ranging measurement result is sent through broadcast.

In this application, the sensing measurement result may be unicast, and the ranging measurement result may be broadcast, with little change to a procedure in the result feedback phase, which is easy to implement.

According to a second aspect, this application provides a measurement method. The method includes:
A second device sends a sensing sounding trigger frame to a third device, where the sensing sounding trigger frame is used to trigger the third device to transmit a null data packet NDP, and the NDP is used to determine a sensing measurement result and a ranging measurement result, where
the ranging measurement result includes a second ranging measurement result and a third ranging measurement result, the second ranging measurement result is obtained by the second device through measurement based on the transmitted NDP, and the third ranging result is obtained by the third device through measurement based on the transmitted NDP;
the second device receives the third ranging measurement result and the sensing measurement result from the third device; and
the second device sends the sensing measurement result and the ranging measurement result to a first device, where the ranging measurement result is used to assist the first device in determining a first ranging measurement result of the first device.

In a possible implementation, the method further includes:
The second device receives a proxy request from the first device, where the proxy request is used to request the second device to perform sensing measurement and ranging measurement on behalf of the first device.

In a possible implementation, the sensing measurement result includes channel state information CSI.

In a possible implementation, the sensing sounding trigger frame carries first indication information, the first indication information is carried in a second field of the sensing sounding trigger frame, and a value of the first indication information in the sensing sounding trigger frame is a first value.

In this application, a value of a corresponding field indicating a secondary type of the sensing sounding trigger frame is set to a first value, for example, the first value is 4, so that a non-AP STA (that is, the third device) participating in sensing and ranging can correctly interpret the sensing sounding trigger frame as an SBP-based sensing sounding trigger frame.

In a possible implementation, the sensing sounding trigger frame carries a measurement setup identifier used for sensing measurement and a measurement instance identifier used for sensing measurement.

The measurement setup identifier and the measurement instance identifier are carried in the second field of the sensing sounding trigger frame, and a length of the second field is 16 bits.

In this application, the second field of the sensing sounding trigger frame carries the measurement setup identifier and the measurement instance identifier, to help the first device normally perform sensing measurement, and improve accuracy of a sensing measurement process. It should be noted that, in embodiments of this application, the second field of the sensing sounding trigger frame may be understood as a trigger dependent common information field. This is not limited herein.

In a possible implementation, the third device includes a ranging device.

Last 6 bits in the 16 bits are a sounding dialog token number (sounding dialog token number) field.

In this application, when the third device includes a sensing device and a ranging device, or when the third device is only a ranging device, the second field carries the measurement setup identifier and the measurement instance identifier, and the last 6 bits of the second field are set as the sounding dialog token number field, so that the sensing device can identify information used for sensing, and normal operation of the ranging device is not affected. It should be noted that, in embodiments of this application, the second field of the sensing sounding trigger frame may be understood as a trigger dependent common information field. This is not limited herein.

In a possible implementation, the sensing measurement result and the ranging measurement result are carried in a same frame.

Alternatively, the sensing measurement result and the ranging measurement result are carried in different frames.

In a possible implementation, the ranging measurement result is sent through broadcast.

According to a third aspect, this application provides a measurement apparatus. The apparatus includes:
a transceiver unit, configured to receive a sensing measurement result and a ranging measurement result from a second device, where
the transceiver unit is configured to receive null data packets NDPs transmitted between the second device and a third device; and
a processing unit, configured to determine a first ranging measurement result of a first device based on the ranging measurement result and the NDPs.

In a possible implementation, the transceiver unit is further configured to:
send a proxy request to the second device, where the proxy request is used to request the second device to perform sensing measurement and ranging measurement on behalf of the first device.

In a possible implementation, the sensing measurement result includes channel state information CSI.

In a possible implementation, the processing unit is specifically configured to:
determine the first ranging measurement result of the first device based on the ranging measurement result and receiving time of the NDPs.

In a possible implementation, the sensing measurement result and the ranging measurement result are carried in a same frame.

Alternatively, the sensing measurement result and the ranging measurement result are carried in different frames.

In a possible implementation, the ranging measurement result is sent through broadcast.

According to a fourth aspect, this application provides a measurement apparatus. The apparatus includes:
a transceiver unit, configured to send a sensing sounding trigger frame to a third device, where the sensing sounding trigger frame is used to trigger the third device to transmit a null data packet NDP, and the NDP is used to determine a sensing measurement result and a ranging measurement result.

The ranging measurement result includes a second ranging measurement result and a third ranging measurement result, the second ranging measurement result is obtained by a second device through measurement based on the transmitted NDP, and the third ranging result is obtained by the third device through measurement based on the transmitted NDP.

The transceiver unit is configured to receive the third ranging measurement result and the sensing measurement result from the third device.

The transceiver unit is configured to send the sensing measurement result and the ranging measurement result to a first device, where the ranging measurement result is used to assist the first device in determining a first ranging measurement result of the first device.

In a possible implementation, the transceiver unit is further configured to:
receive a proxy request from the first device, where the proxy request is used to request the second device to perform sensing measurement and ranging measurement on behalf of the first device.

In a possible implementation, the sensing measurement result includes channel state information CSI.

In a possible implementation, the sensing sounding trigger frame carries first indication information, the first indication information is carried in a second field of the sensing sounding trigger frame, and a value of the first indication information in the sensing sounding trigger frame is a first value.

In a possible implementation, the sensing sounding trigger frame carries a measurement setup identifier used for sensing measurement and a measurement instance identifier used for sensing measurement.

The measurement setup identifier and the measurement instance identifier are carried in the second field of the sensing sounding trigger frame, and a length of the second field is 16 bits.

In a possible implementation, the third device includes a ranging device.

Last 6 bits in the 16 bits are a sounding dialog token number (sounding dialog token number) field.

In a possible implementation, the sensing measurement result and the ranging measurement result are carried in a same frame.

Alternatively, the sensing measurement result and the ranging measurement result are carried in different frames.

In a possible implementation, the ranging measurement result is sent through broadcast.

According to a fifth aspect, this application provides a measurement apparatus, including a memory, a transceiver, and a processor.

The memory is configured to store program code.

The transceiver and the processor are configured to execute the code in the memory, and specifically perform the following steps:
The transceiver is configured to receive a sensing measurement result and a ranging measurement result from a second device;
the transceiver is configured to receive null data packets NDPs transmitted between the second device and a third device; and
the processor is configured to determine a first ranging measurement result of a first device based on the ranging measurement result and the NDPs.

In a possible implementation, the transceiver is further configured to:
send a proxy request to the second device, where the proxy request is used to request the second device to perform sensing measurement and ranging measurement on behalf of the first device.

In a possible implementation, the sensing measurement result includes channel state information CSI.

In a possible implementation, the processor is specifically configured to:
determine the first ranging measurement result of the first device based on the ranging measurement result and receiving time of the NDPs.

In a possible implementation, the sensing measurement result and the ranging measurement result are carried in a same frame.

Alternatively, the sensing measurement result and the ranging measurement result are carried in different frames.

In a possible implementation, the ranging measurement result is sent through broadcast.

According to a sixth aspect, this application provides a measurement apparatus. The apparatus includes:
a memory, configured to store program code; and
a transceiver and a processor, configured to execute the code in the memory, and specifically perform the following steps:
   sending a sensing sounding trigger frame to a third device, where the sensing sounding trigger frame is used to trigger the third device to transmit a null data packet NDP, and the NDP is used to determine a sensing measurement result and a ranging measurement result, where
   the ranging measurement result includes a second ranging measurement result and a third ranging measurement result, the second ranging measurement result is obtained by a second device through measurement based on the transmitted NDP, and the third ranging result is obtained by the third device through measurement based on the transmitted NDP;
   receiving the third ranging measurement result and the sensing measurement result from the third device; and
   sending the sensing measurement result and the ranging measurement result to a first device, where the ranging measurement result is used to assist the first device in determining a first ranging measurement result of the first device.

In a possible implementation, the transceiver is further configured to:
receive a proxy request from the first device, where the proxy request is used to request the second device to perform sensing measurement and ranging measurement on behalf of the first device.

In a possible implementation, the sensing measurement result includes channel state information CSI.

In a possible implementation, the sensing sounding trigger frame carries first indication information, the first indication information is carried in a second field of the sensing sounding trigger frame, and a value of the first indication information in the sensing sounding trigger frame is a first value.

In a possible implementation, the sensing sounding trigger frame carries a measurement setup identifier used for sensing measurement and a measurement instance identifier used for sensing measurement.

The measurement setup identifier and the measurement instance identifier are carried in the second field of the sensing sounding trigger frame, and a length of the second field is 16 bits.

In a possible implementation, the third device includes a ranging device.

Last 6 bits in the 16 bits are a sounding dialog token number (sounding dialog token number) field.

In a possible implementation, the sensing measurement result and the ranging measurement result are carried in a same frame.

Alternatively, the sensing measurement result and the ranging measurement result are carried in different frames.

In a possible implementation, the ranging measurement result is sent through broadcast.

According to a seventh aspect, this application provides a computer-readable storage medium. The computer-readable storage medium stores instructions. The instructions may be executed by one or more processors on a processing circuit. When the instructions are run on a computer, the computer is enabled to perform the measurement method according to any one of the foregoing aspects. Optionally, the computer-readable storage medium may be a non-volatile readable storage medium.

According to an eighth aspect, this application provides a computer program product including an instruction. When the computer program product is run on a computer, the computer is enabled to perform the measurement method according to any one of the foregoing aspects.

According to a ninth aspect, this application provides a chip or a chip system, including a processing circuit. The processing circuit may be configured to perform the following operations: obtaining a sensing measurement result and a ranging measurement result from a second device and null data packets NDPs transmitted between the second device and a third device; and determining a first ranging measurement result of a first device based on the ranging measurement result and the NDPs.

Optionally, the chip or the chip system may further include an input/output interface. The input/output interface may be configured to output or input one or more of the following information: the sensing measurement result, the ranging measurement result, and the NDP.

According to embodiments of this application, an SBP procedure may be combined with a passive ranging procedure, so that a device initiating SBP can implement sensing and/or passive ranging, and a passive ranging device can transparently participate in a sensing by proxy measurement process and complete passive ranging.

### BRIEF DESCRIPTION OF DRAWINGS

FIG. 1 is a diagram of a communication system according to an embodiment of this application;
FIG. 2a is a diagram of a sensing measurement process with a trigger-based mechanism;
FIG. 2b is a sensing measurement scenario with a trigger-based mechanism;
FIG. 3 a is a diagram of a ranging measurement process with a trigger-based mechanism;
FIG. 3b is a ranging measurement scenario with a trigger-based mechanism;
FIG. 4 is a hybrid measurement procedure of sensing and ranging according to an embodiment of this application;
FIG. 5a is a diagram of a feedback phase of a hybrid measurement procedure of sensing and ranging according to an embodiment of this application;
FIG. 5b is another diagram of a feedback phase of a hybrid measurement procedure of sensing and ranging according to an embodiment of this application;
FIG. 6 is a diagram of an SBP measurement scenario;
FIG. 7a is a diagram of a passive ranging measurement scenario;
FIG. 7b is a diagram of a passive ranging measurement process;
FIG. 8 is a diagram of a standard trigger frame;
FIG. 9 is a diagram of a common information field of a trigger frame;
FIG. 10 is a diagram of a trigger type field of a trigger frame;
FIG. 11 is a diagram of a trigger dependent common information field of a common information field of a trigger frame;
FIG. 12a is a diagram of a subtype of a ranging trigger frame;
FIG. 12b is a diagram of a subtype of a sensing trigger frame according to an embodiment of this application;
FIG. 13 is a diagram of a user information field of a trigger frame;
FIG. 14 is a diagram of an HE NDPA;
FIG. 15 is a schematic flowchart of a trigger-based measurement method according to this application;
FIG. 16 is a schematic flowchart of another measurement method according to this application;
FIG. 17 is a diagram of a structure of a trigger dependent common information field of a ranging sounding trigger frame corresponding to passive ranging according to an embodiment of this application;
FIG. 18 is a diagram of a measurement device according to an embodiment of this application; and
FIG. 19 is a diagram of a measurement apparatus according to an embodiment of this application.

### DESCRIPTION OF EMBODIMENTS

The following clearly and completely describes technical solutions in embodiments of this application with reference to accompanying drawings in embodiments of this application.

In descriptions of this application, unless otherwise specified, "/" means "or". For example, A/B may mean A or B. The term "and/or" in this specification describes only an association relationship between associated objects and indicates that three relationships may exist. For example, A and/or B may indicate the following three cases: Only A exists, both A and B exist, and only B exists. In addition, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate: a, b, c, a and b, a and c, b and c, or a, b, and c. a, b, and c may be singular or plural.

In the descriptions of this application, words such as "first" and "second" are merely used to distinguish between different objects, and do not limit quantities and execution sequences. In addition, the words such as "first" and "second" do not indicate a definite difference. In addition, the terms "include", "have", and any other variant thereof are intended to cover non-exclusive inclusion. For example, a process, a method, a system, a product, a device, or the like that includes a series of steps or units is not limited to the listed steps or units, but optionally further includes an unlisted step, unit, or the like, or optionally further includes another step or unit inherent to the process, the method, the product, the device, or the like.

In this application, an expression such as "example" or "for example" is used to give an example, an illustration, or a description. Any embodiment or design solution described with "example", "in an example", or "for example" in this application shall not be explained as being more preferred or having more advantages than another embodiment or design solution. Exactly, use of the expression "example", "in an example", "for example", or the like is intended to present a related concept in a specific manner.

It should be understood that, in this application, "when" and "if" mean that an apparatus performs corresponding processing in an objective situation, but do not constitute a limitation on time, do not require the apparatus to perform a determining action during implementation, and do not mean any other limitation.

In this application, an element represented in a singular form is intended to indicate "one or more", but does not indicate "one and only one", unless otherwise specified.

It may be understood that, in embodiments of this application, "B corresponding to A" indicates that there is a correspondence between A and B, and B may be determined according to A. However, it should be further understood that determining (or generating) B according to (or based on) A does not mean that B is determined (or generated) according to (or based on) only A. B may alternatively be determined (or generated) according to (or based on) A and/or other information.

The technical solutions in embodiments of this application may be applied to various communication systems. For example, the communication system may be a wireless local area network (wireless local area network, WLAN), a cellular network, or another wireless communication system that supports a sensing procedure and/or a ranging procedure. In embodiments of this application, an example in which a network of IEEE 802.11 is deployed is mainly used for description, for example, an 802.11a/b/g standard, an 802.11n standard, an 802.11ac standard, an 802.11ax standard, or a next generation thereof, such as an 802.11be standard, Wi-Fi 7, or EHT, or a next generation of 802. 11be, Wi-Fi 8, 802. 11bf, or SENSING, or a next generation standard. Various aspects in this application may be extended to other networks that use various standards or protocols, for example, Bluetooth (Bluetooth), a high-performance radio LAN (high performance radio LAN, HIPERLAN) (which is a wireless standard similar to an IEEE 802.11 standard, and is mainly used in Europe), a wide area network (WAN), a personal area network (personal area network, PAN), or another network that is known or will be developed in future. Therefore, regardless of used coverage and a used wireless access protocol, various aspects provided in this application are applicable to any appropriate wireless network.

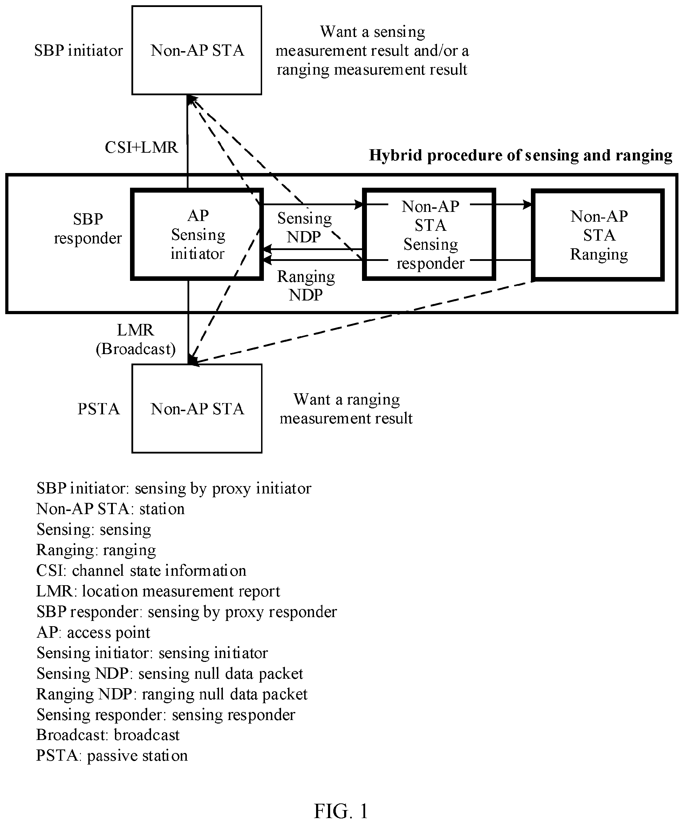

For example, FIG. 1 is a diagram of an architecture of a communication system to which an embodiment of this application is applicable. As shown in FIG. 1, when an AP initiates an SBP-based proxy sensing procedure, the AP and a sensing responder (the sensing responder is a sensing non-AP STA) complete an original sensing procedure, and a frame used for sensing sent by the AP, for example, a sensing NDP (Sensing NDP), may be received by a ranging device (Ranging non-AP STA) and identified as a frame used for ranging. For the ranging device, this is a passive ranging process. A passive station (PSTA) that wants to obtain a ranging result may use this proxy sensing process (which is also a passive ranging process for the PSTA) to obtain a ranging result. A hybrid measurement procedure of sensing and ranging in bold type is described in detail below, and details are not described here.

### I. The following briefly describes some content, terms, or nouns related to this application.

1. A sensing initiator (Sensing initiator) is a device that initiates a sensing process. The sensing initiator is usually an access point (access point, AP).
2. A sensing responder (Sensing responder) is a device that participates in a sensing process initiated by a sensing initiator. The sensing responder is usually a station (non-AP Station, non-AP STA). A station in embodiments of this application is usually a non-AP Wi-Fi terminal, or is referred to as a non-access point.
3. A sensing transmitter (Sensing transmitter) is a device that sends a null data packet (null data packet, NDP) used for sensing measurement in a sensing process. The sensing transmitter may be an AP, or may be a non-AP STA.
4. A sensing receiver (Sensing receiver) is a device that receives an NDP sent by a sensing transmitter and performs sensing measurement in a sensing process. The sensing receiver may be an AP, or may be a non-AP STA.
5. Measurement setup (Measurement setup) is for a sensing initiator and a responder to exchange and unify some parameters, attributes, and the like that need to be used in a sensing process, for example, roles of the sensing initiator and the responder (for example, a sensing transmitter and a sensing receiver), a measurement feedback type, and other parameters. Each set of parameters is identified by one measurement setup ID.
6. Measurement instance (Measurement instance): Sensing measurement is performed by a sensing measurement instance. One sensing measurement instance allows a plurality of sensing responders to join. Each measurement instance is identified by one measurement instance ID.
7. Access point device and non-access point device

In embodiments of this application, an access point device may be an access point (access point, AP), and a non-access point device may be a station (non-AP Station, non-AP STA). A non-AP STA has a wireless sending and receiving function, and may support 802.11 series protocols and communicate with an AP or another non-AP STA. For example, the non-AP STA may be any user measurement device that allows a user to communicate with an AP and further communicate with a WLAN, for example, including but not limited to user equipment that can be connected to a network, such as a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), or a mobile phone, or an internet of things node in an internet of things, a vehicle-mounted measurement apparatus in an internet of vehicles, or the like. Optionally, the non-AP STA may alternatively be a chip and a processing system in the foregoing terminals.

In embodiments of this application, an AP is an apparatus that provides a service for a non-AP STA, and may support 802.11 series protocols. For example, the AP may be a communication entity such as a communication server, a router, a switch, or a bridge. Alternatively, the AP may include various forms of macro base stations, micro base stations, relay stations, and the like. Certainly, the AP may alternatively be chips and processing systems in these various forms of devices, to implement methods and functions in embodiments of this application.

### 8. Sensing measurement

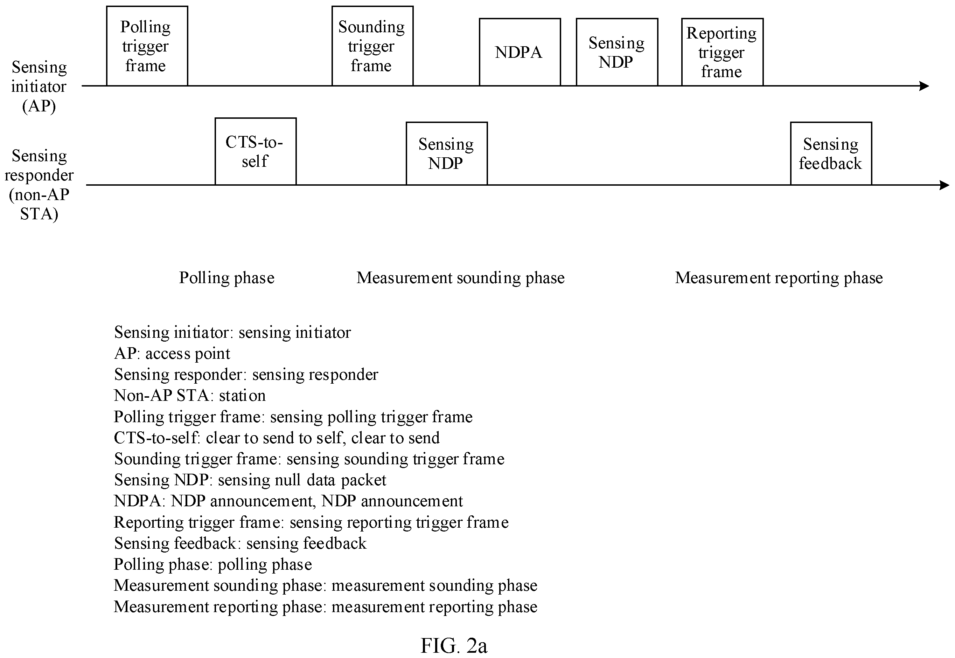

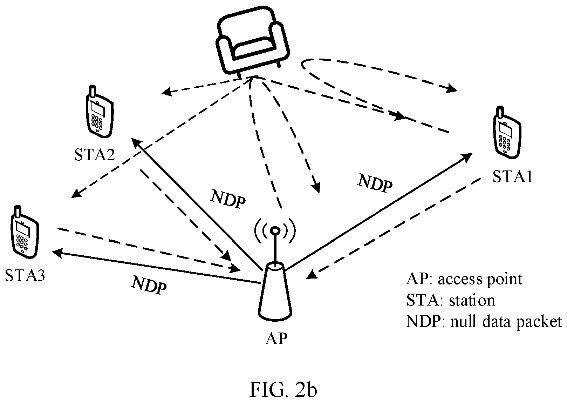

FIG. 2a is a sensing (sensing) measurement process with a trigger-based (trigger-based, TB) mechanism. The sensing measurement process with the trigger-based mechanism may be applied to a system scenario shown in FIG. 2b. In the sensing measurement process with the trigger-based mechanism, an AP (for example, an AP in FIG. 2b) is a sensing initiator, and a non-AP STA (for example, a STA1 to a STA3 in FIG. 2b) is a sensing responder. The sensing initiator (sensing initiator) is a station that initiates a sensing process, and the sensing responder (sensing responder) is a station that participates in the sensing process initiated by the sensing initiator. For example, sensing measurement with the trigger-based mechanism may include but is not limited to a polling phase (polling phase), a measurement sounding phase (measurement sounding phase), a measurement reporting phase (measurement reporting phase), and the like. In the polling phase, the AP may send a polling trigger frame (polling trigger frame) to the non-AP STA to confirm that the polled station (non-AP STA) can participate in measurement and feedback in a current measurement instance. In the measurement sounding phase, the AP may send a sounding trigger frame (sounding trigger frame) to the non-AP STA to trigger the non-AP STA to transmit a sensing null data packet (sensing null data packet, sensing NDP), and measure the transmitted sensing NDP to perform sensing. Optionally, the AP may further use a null data packet announcement (null data packet announcement, NDPA) to notify the corresponding non-AP STA that the AP is to send a sensing NDP (sensing NDP) immediately afterward, to enhance sensing effect. The NDPA is used to notify related configuration information to the non-AP STA that is to monitor the sensing NDP, and the non-AP STA may measure the subsequently sent sensing NDP to obtain channel information (for example, including channel state information (channel state information, CSI)). Finally, in the measurement reporting phase, the AP may send a reporting trigger frame (reporting trigger frame) to the non-AP STA, so that the non-AP STA reports a measurement result to the AP in a sensing feedback (sensing feedback) manner.

### 9. Ranging measurement

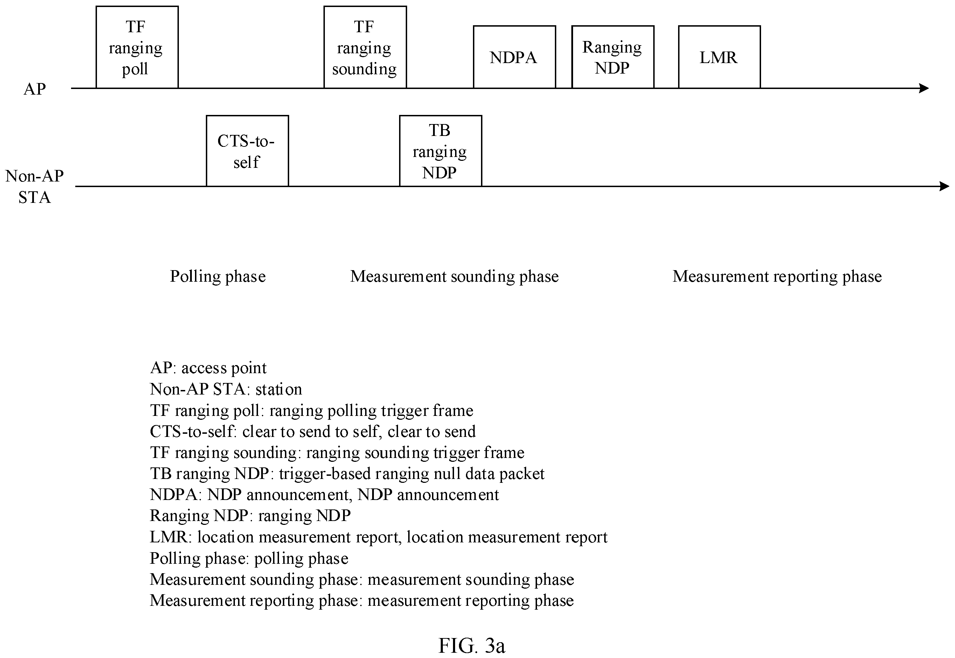

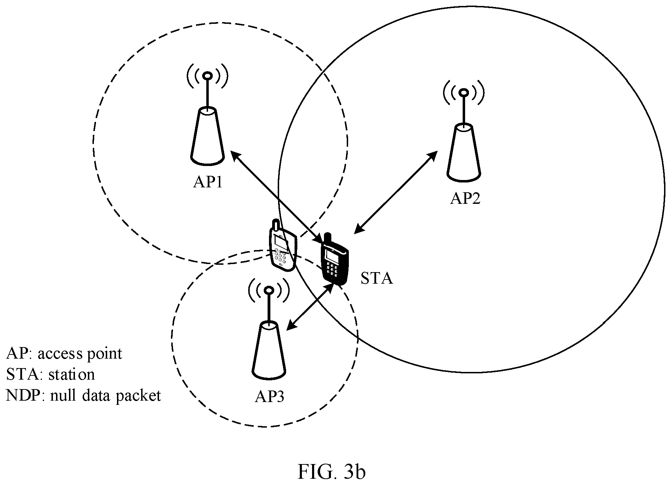

FIG. 3a is a ranging (ranging) measurement process with a trigger-based (trigger-based, TB) mechanism. The ranging measurement process with the trigger-based mechanism may be applied to a system scenario shown in FIG. 3b. In the ranging measurement process with the trigger-based mechanism, a non-AP STA (for example, a STA in FIG. 3b) wants to obtain its own location based on a distance between the non-AP STA and an AP (for example, an AP1 to an AP3 in FIG. 3b). For example, ranging measurement with the trigger-based mechanism may include but is not limited to a polling phase (polling phase), a measurement sounding phase (measurement sounding phase), a measurement reporting phase (measurement reporting phase), and the like. In the polling phase, the AP may send a ranging polling trigger frame (TF ranging poll frame) to the non-AP STA to confirm that the polled station (non-AP STA) can participate in current measurement and feedback. In the measurement sounding phase (measurement sounding phase), the AP may use a ranging polling trigger frame (TF ranging sounding frame) to trigger the non-AP STA to transmit a ranging trigger NDP (TB Ranging NDP). Based on the transmitted ranging trigger NDP, the non-AP STA may obtain a sending time (11) of the ranging trigger NDP. When the ranging trigger NDP arrives at the AP, an arrival time (t2) of the ranging trigger NDP is obtained correspondingly. Then, the AP uses an NDPA to notify the corresponding non-AP STA that the AP is to send a ranging NDP (ranging NDP) immediately afterward. The NDPA is used to notify related configuration information to the non-AP STA that is to monitor the ranging NDP. The ranging NDP also corresponds to a sending time (t3) and an arrival time (t4). Finally, in the measurement reporting phase, the AP sends a location measurement report (location measurement report, LMR) frame to the non-AP STA. In the LMR frame, t2 and t3 obtained at the AP are included. In this case, the non-AP STA may obtain a straight-line distance from the AP based on the four timestamps t1, t2, t3, and t4, to implement ranging measurement.

### 10. Hybrid measurement procedure of sensing and ranging

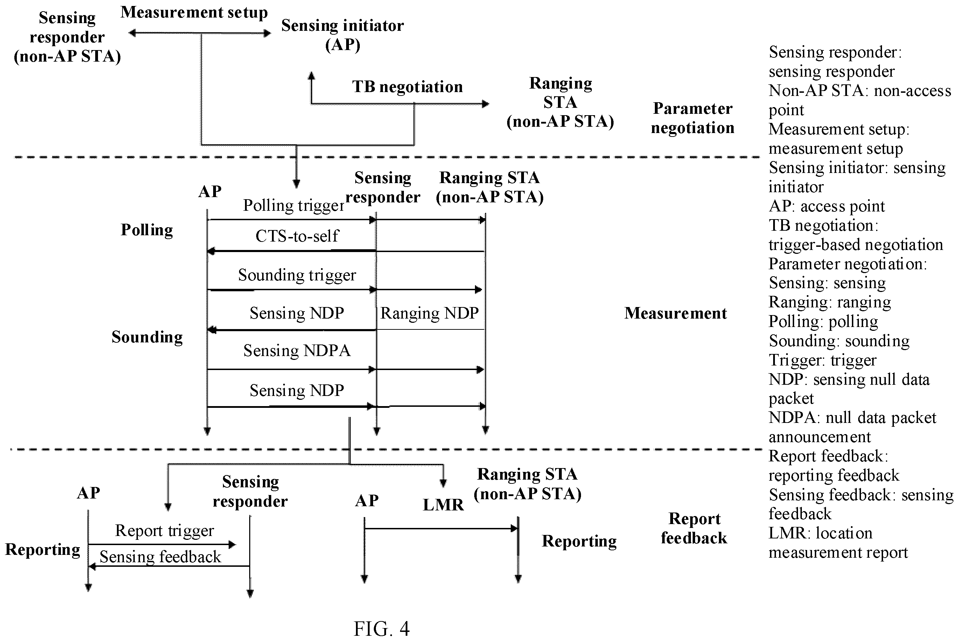

FIG. 4 is a hybrid measurement procedure of sensing and ranging according to an embodiment of this application. In the hybrid measurement procedure, an AP performs sensing measurement and/or ranging measurement with a device supporting sensing, and performs ranging measurement with a device supporting only ranging. For example, the hybrid measurement procedure of sensing and ranging may include but is not limited to a measurement setup phase (measurement setup phase), a measurement phase (measurement phase), a feedback phase (feedback phase), and the like. The measurement phase may include the polling phase (polling phase) and the measurement sounding phase (measurement sounding phase) described in the sensing measurement process and the ranging measurement process.

Before the measurement phase, the AP performs parameter negotiation with the sensing device and the ranging device separately (that is, a negotiation phase). In a subsequent measurement process, the sensing device and the ranging device separately use a negotiated parameter to perform measurement. For example, the AP shown in FIG. 4 may first negotiate with the sensing device, then negotiate with the ranging device, and then start a measurement process. The measurement process is a hybrid of the sensing measurement and the ranging measurement described above. It should be noted that, in a sensing measurement process and a ranging measurement process, a trigger frame, an NDPA, and the like sent by the AP to a sensing non-AP STA and a ranging non-AP STA may be identified by both the sensing non-AP STA and the ranging non-AP STA, so that when the AP and the sensing device perform sensing measurement, the AP and the ranging device perform ranging measurement, to improve efficiency of the AP. In the feedback phase after the measurement process, the AP may first feed back a ranging measurement result to the ranging device, and then request the sensing device to feed back a sensing measurement result to the AP by using a sensing feedback (sensing feedback) frame. It should be noted that, the AP is a sensing initiator and wants to obtain a sensing measurement result, and therefore the non-AP STA needs to feed back the sensing measurement result to the AP. For ranging, the non-AP STA wants to obtain its own location, and therefore the AP needs to feed back a corresponding ranging measurement result to the non-AP STA, but the AP itself does not need the ranging measurement result.

It may be understood that, FIG. 4 is merely an implementation of the hybrid procedure, and the hybrid procedure may alternatively be implemented in another manner. For example, in the earlier parameter negotiation process, the AP may first perform parameter negotiation with the ranging device, and then perform parameter negotiation with the sensing device. In the final feedback phase, the AP may alternatively first trigger the sensing device to feed back a sensing measurement result, and then send a ranging measurement result to the ranging device.

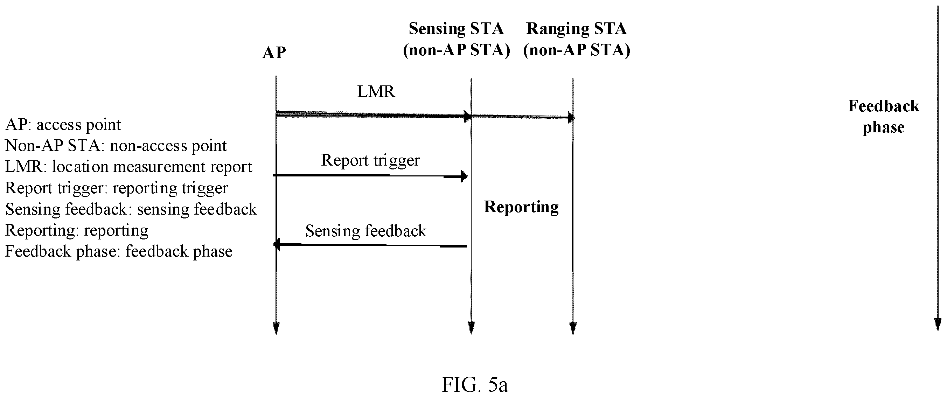

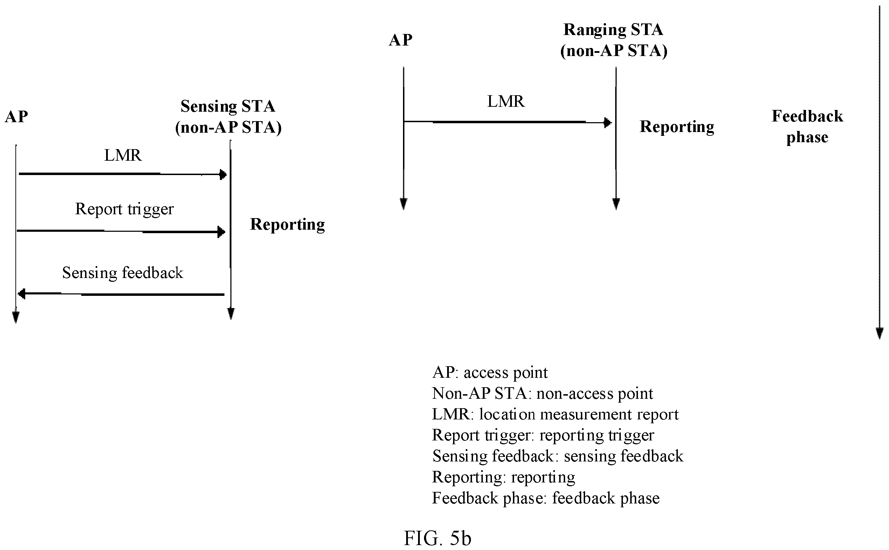

Optionally, if the sensing device declares, in the negotiation phase, to the AP that the sensing device performs both sensing and ranging, the AP needs to feed back a ranging measurement result to the sensing device in the feedback phase. In a possible implementation, the feedback phase may be shown in FIG. 5a. The AP may place a ranging measurement result of the sensing device and a ranging measurement result of the ranging device in a same LMR frame, and send the LMR frame to the sensing device and the ranging device. The sensing device reads the corresponding ranging measurement result, and the ranging device may read the corresponding ranging measurement result. In another possible implementation, the feedback phase may be shown in FIG. 5b. The AP may place a ranging measurement result of the sensing device and a ranging measurement result of the ranging device in two LMR frames respectively, and send the two LMR frames to the sensing device and the ranging device respectively. A sequence in which the AP sends the two LMR frames is not limited in embodiments of this application. For the sensing device, whether the AP first sends a ranging measurement result or first triggers a sensing measurement result is not limited in embodiments of this application.

### 11. Sensing by proxy (sensing by proxy, SBP) measurement

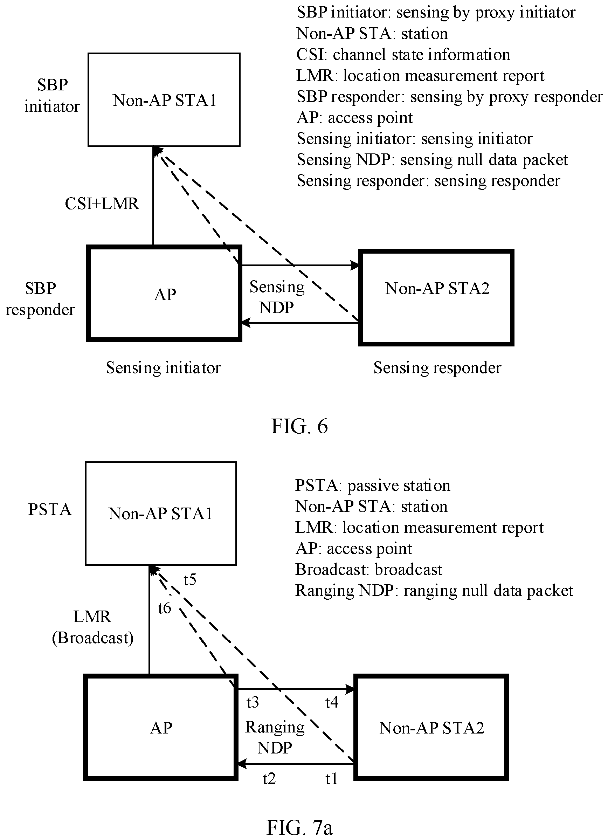

FIG. 6 is a diagram of an SBP measurement scenario. As shown in FIG. 6, in an SBP measurement process, a non-AP STA (for example, a non-AP STA1 in FIG. 6) serves as an initiator in the SBP process (that is, an SBP initiator), and requests an AP as a proxy to initiate a sensing procedure. To be specific, the non-AP STA1 sends a proxy request to the AP, to request the AP to initiate a sensing procedure on behalf of the non-AP STA1. The AP serves as a responder in the SBP process, and is also a sensing initiator. The AP initiates a sensing procedure to another non-AP STA (for example, a non-AP STA2 in FIG. 6). The sensing procedure between the AP and the another non-AP STA may be a sensing procedure with a trigger-based mechanism. For a specific procedure, refer to FIG. 2a. Details are not described herein again. It should be noted that, in a process in which the AP performs sensing with the another non-AP STA, an NDP may be sent unidirectionally to perform sensing measurement, or NDPs may be sent bidirectionally to enhance sensing effect. The SBP initiator may participate in sensing as a sensing responder, or may not participate in sensing. Finally, after the AP completes sensing with the another non-AP STA, the AP feeds back a sensing result (for example, channel state information (channel state information, CSI)) to the SBP initiator, that is, the non-AP STA1.

### 12. Passive ranging (Passive ranging) measurement

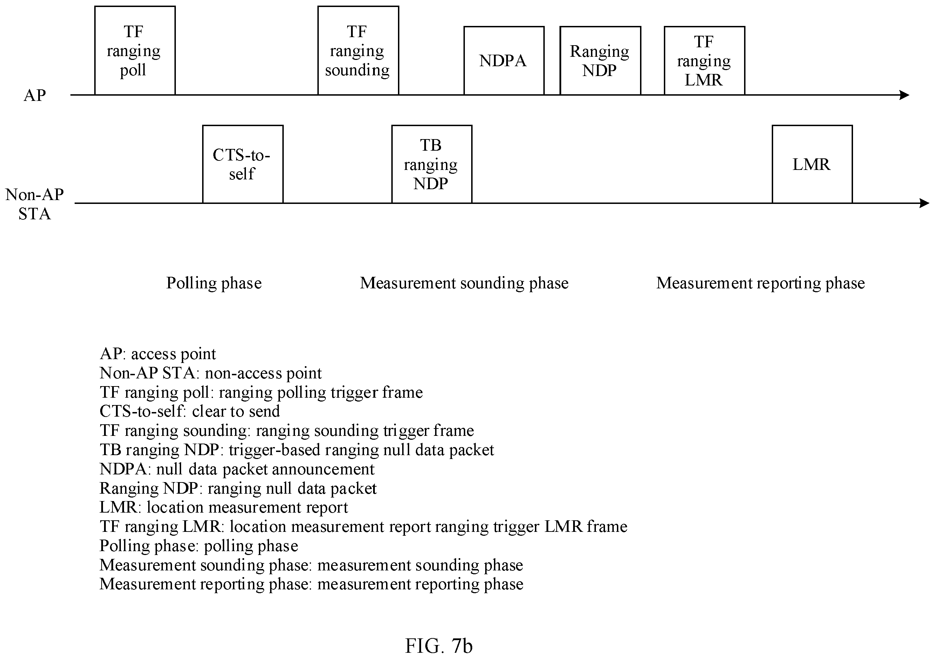

FIG. 7a is a diagram of a passive ranging measurement scenario. As shown in FIG. 7a, in a passive ranging process, if a non-AP STA (for example, a non-AP STA1 in FIG. 7a) wants to obtain its own location based on a ranging procedure between an AP and another non-AP STA (for example, a non-AP STA2 in FIG. 7a), the non-AP STA1 is referred to as a passive station (passive STA, PSTA). The passive station PSTA does not need to perform any negotiation with the AP, and only needs to monitor bidirectional NDPs between the AP and the another non-AP STA. Therefore, whether the ranging process is passive ranging or non-passive ranging is determined by the AP. It should be noted that, the PSTA obtains an arrival time based on each detected NDP, to assist in positioning of the PSTA. Specifically, as shown in FIG. 7a, the PSTA obtains, by monitoring an NDP sent by the another non-AP STA to the AP, an arrival time (t5) of the NDP correspondingly, and obtains, by monitoring an NDP sent by the AP to the another non-AP STA, an arrival time (t6) of the NDP correspondingly. Further, refer to FIG. 7b. FIG. 7b is a diagram of a passive ranging measurement process. The passive ranging procedure shown in FIG. 7b is different from the non-passive ranging procedure shown in FIG. 3a. In a measurement reporting phase of the passive ranging procedure, the AP sends a ranging trigger LMR frame (TF Ranging LMR) to the another ranging non-AP STA. After receiving the TF ranging LMR, the another ranging non-AP STA feeds back a ranging result on the non-AP STA side to the AP. The ranging result on the non-AP STA side may be carried in an LMR frame, and the ranging result on the non-AP STA side includes t1 and t4. Therefore, after the AP receives the LMR frame, the AP may send, to the PSTA through broadcast, a ranging result (the ranging result includes a ranging result on the AP side (that is, t2 and t3) and the ranging result on the non-AP STA side (that is, t1 and t4)) between the AP and the another non-AP STA, and then the PSTA may obtain its own location based on a previous monitoring result (that is, t5 and t6).

### 13. Trigger frame

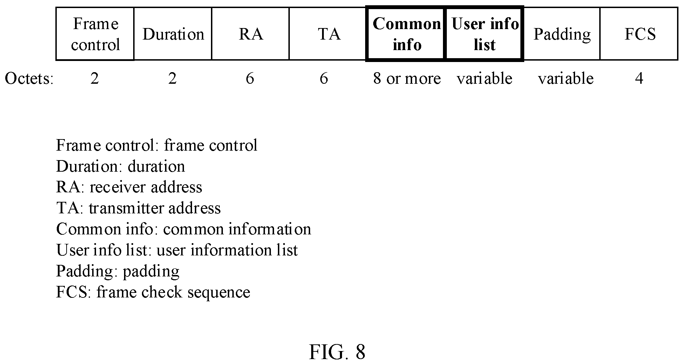

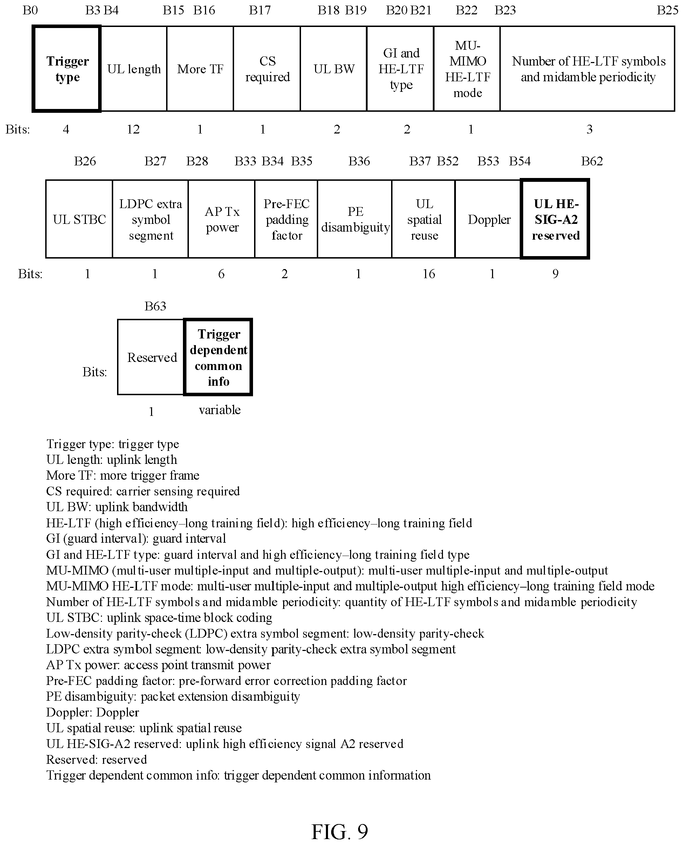

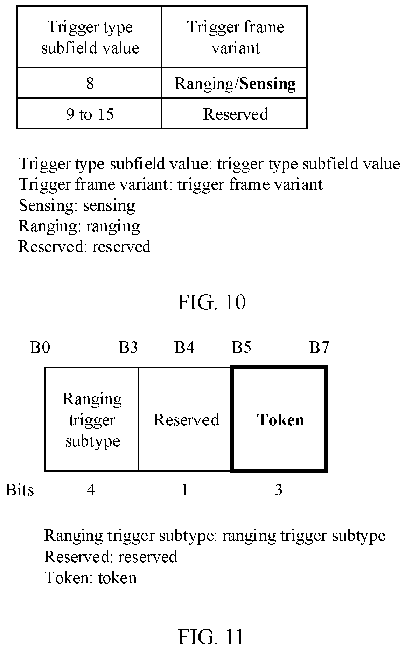

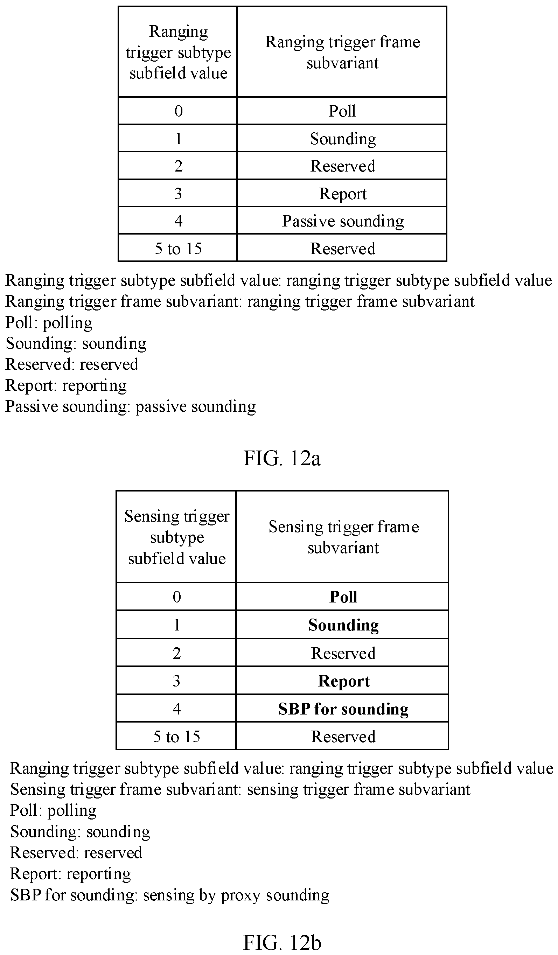

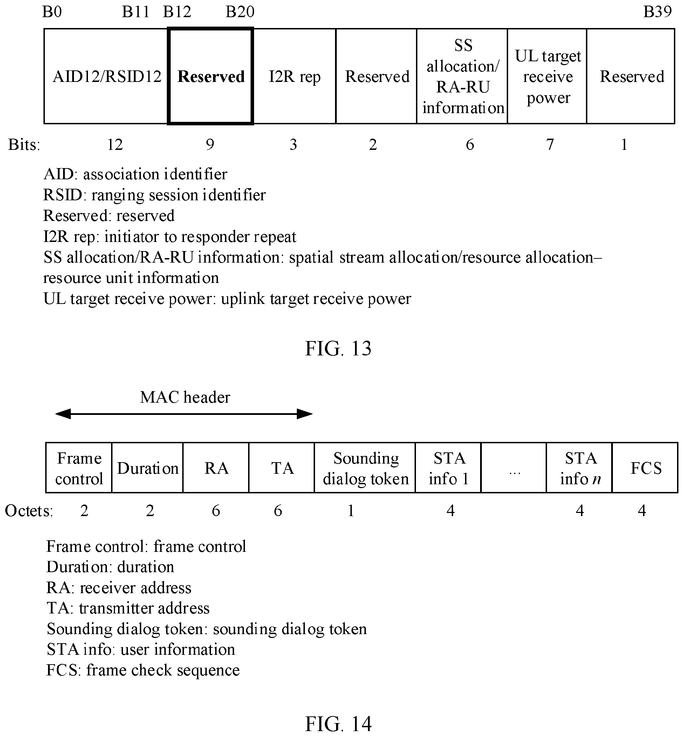

FIG. 8 shows a standard trigger frame. A ranging polling trigger frame, a ranging sounding trigger frame, and a ranging reporting trigger frame that are used in ranging measurement are designed based on this format. In embodiments of this application, a sensing polling trigger frame, a sensing sounding trigger frame, and a sensing reporting trigger frame that are used in sensing measurement are designed based on the trigger frame shown in FIG. 8. A common information field (common info) and a user information field (user info list) in the standard trigger frame shown in FIG. 8 are mainly improved to implement designs in embodiments of this application. It may be understood that, another field (for example, a field that is not described in detail in embodiments of this application, such as frame control (frame control)) shown in FIG. 8 is similar to a definition in an existing protocol. This is not limited in this embodiment.
(1) Common information field (common info): A format of a common information field is shown in FIG. 9. Common information fields of the ranging polling trigger frame, the ranging sounding trigger frame, and the ranging reporting trigger frame that are used in ranging measurement include at least 64 bits (bits) of B0 to B63, that is, 8 bytes (bytes). Similarly, common information fields of the sensing polling trigger frame, the sensing sounding trigger frame, and the sensing reporting trigger frame that are designed in embodiments of this application also include at least 64 bits. It may be understood that, another field (for example, a field that is not described in detail in embodiments of this application, such as an uplink length (UL Length)) shown in FIG. 9 is similar to a definition in an existing protocol. This is not limited in this embodiment.
   A. Trigger type (trigger type) field: In the common information field shown in FIG. 9, 4 bits of B0 to B3 are a trigger type (trigger type) field, and the field indicates a type of a trigger frame. The 4 bits may represent 16 values, and each value represents a type. In an existing protocol, when a value of the trigger type field is 8, it indicates that the trigger frame is a ranging trigger frame, and a ranging device may identify the value and use the trigger frame to perform ranging measurement, as shown in FIG. 10. In embodiments of this application, a same value, that is, 8, is used to indicate that the trigger frame is a sensing trigger frame. In other words, in embodiments of this application, when a value of the trigger type field of the trigger frame is 8, a ranging device may identify the trigger frame as a ranging trigger frame, and a sensing device may identify the trigger frame as a sensing trigger frame, to facilitate implementation of a hybrid measurement procedure.
   B. Trigger dependent common information field (trigger dependent common info): In the common information field shown in FIG. 9, a variable field after B63 is a trigger dependent common information field, and is used to carry information about this type of trigger frame. In embodiments of this application, the trigger dependent common information field is also referred to as a second field of the common information field. For example, a format of a trigger dependent common information field of an existing ranging trigger frame is shown in FIG. 11, including 8 bits (1 byte) in total. For the existing ranging trigger frame, information about the ranging trigger frame may be carried in a token (token) field of the trigger dependent common information field. In the sensing trigger frame designed in embodiments of this application, information (for example, it is assumed that the information is 1 bit, and is second indication information described in the following embodiments) about the sensing trigger frame may be carried in B4 of the trigger dependent common information field.
      In the trigger dependent common information field shown in FIG. 11, B0 to B3 indicate a subtype of the ranging trigger frame (ranging trigger subtype). In other words, B0 to B3 indicate first indication information described in the following embodiments. 4 bits of B0 to B3 may represent 16 subtypes, and specific information is shown in FIG. 12a. For example, when the trigger frame is a polling trigger frame, a value represented by B0 to B3 is 0. When the trigger frame is a sounding trigger frame, a value represented by B0 to B3 is 1. In embodiments of this application, a subtype of the sensing trigger frame is designed with reference to FIG. 12a. Specific information is shown in FIG. 12b. In FIG. 12b, when the sensing trigger frame is a sensing polling trigger frame, a value represented by B0 to B3 is 0. When the sensing trigger frame is a sensing sounding trigger frame, a value represented by B0 to B3 is 1. Optionally, if an AP does not support sensing by proxy (sensing by proxy, SBP), a value 4 is a reserved value. The trigger dependent common information field shown in FIG. 11 further includes a 1-bit reserved field (reserved).
   C. Uplink high efficiency signal A2 reserved (uplink high efficiency signal A2 reserved, UL HE-SIG-A2 reserved) field: In the common information field shown in FIG. 9, B54 to B63 are reserved fields. To be specific, for an existing ranging trigger frame, B54 to B63 do not carry information about the ranging trigger frame, and a ranging device may not need to read information in the reserved fields. In embodiments of this application, a UL HE-SIG-A2 reserved field (including B54 to B62) plus one reserved bit (B63) is also referred to as a first field of the common information field. In the sensing trigger frame designed in embodiments of this application, information (for example, it is assumed that the information is 1 bit, and is second indication information described in the following embodiments) about the sensing trigger frame may be carried in B63. In addition, information used for sensing measurement (for example, a measurement setup identifier (measurement setup ID) used for sensing measurement and a measurement instance identifier (measurement instance ID) used for sensing measurement described in the following embodiments) may be carried in B54 to B62.
(2) User information field (userinfolist): A format of a user information field is shown in FIG. 13. User information fields of the ranging polling trigger frame, the ranging sounding trigger frame, and the ranging reporting trigger frame that are used in ranging measurement include 40 bits of B0 to B39. Similarly, user information fields of the sensing polling trigger frame, the sensing sounding trigger frame, and the sensing reporting trigger frame that are designed in embodiments of this application also include at least B0 to B39. In the sensing trigger frame designed in embodiments of this application, information (for example, it is assumed that the information is 1 bit, and is second indication information described in the following embodiments) about the sensing trigger frame may be carried in a 1-bit reserved field (B39) or a 2-bit reserved field (B24 and B25) of the user information field. For example, information used for sensing measurement (for example, a measurement setup identifier (measurement setup ID) used for sensing measurement and a measurement instance identifier (measurement instance ID) used for sensing measurement described in the following embodiments) may be carried in B12 to B20 of the user information field of the sensing sounding trigger frame. It may be understood that, another field (for example, a field that is not described in detail in embodiments of this application, such as uplink target receive power (UL target receive power)) shown in FIG. 13 is similar to a definition in an existing protocol. This is not limited in this embodiment.

### 14. NDPA

FIG. 14 shows a frame format of an HE NDPA, including a sounding dialog token (sounding dialog token) field, a plurality of user information fields, and the like. In an 802.11az standard protocol, a ranging NDPA is designed based on the HE NDPA in FIG. 14. In embodiments of this application, a sensing NDPA is also designed based on FIG. 14. The sensing NDPA in embodiments of this application may include but is not limited to the following design manners:
Manner 1: An AP includes information used for sensing measurement, for example, a measurement setup identifier (measurement setup ID) used for sensing measurement and a measurement instance identifier (measurement instance ID) used for sensing measurement described in the following embodiments, in a user information field (STA Info) corresponding to a sensing device, and places information used for ranging measurement in a user information field corresponding to a ranging device. Each user information field includes an association identifier (association identifier, AID), and each device may determine, based on the AID, whether the field is sent to the device.
Manner 2: The AP may add a special user information field (special user info) to an NDPA. For example, a measurement setup identifier (measurement setup ID) used for sensing measurement and a measurement instance identifier (measurement instance ID) used for sensing measurement described in the following embodiments are carried in the special user information field, and information used for ranging measurement is still placed in a user information field corresponding to a ranging device.
Manner 3: The AP may include, for example, a measurement setup identifier (measurement setup ID) used for sensing measurement and a measurement instance identifier (measurement instance ID) used for sensing measurement described in the following embodiments in a sounding dialog token field. A ranging device uses the sounding dialog token field as a sounding dialog token field of the ranging device.

The AP sends an NDP immediately after sending the sensing NDPA. A sensing device performs sensing measurement based on the received NDP, and a ranging device performs ranging measurement based on the received NDP. It may be understood that, another field (for example, a field that is not described in detail in embodiments of this application, such as frame control (frame control)) shown in FIG. 14 is similar to a definition in an existing protocol. This is not limited in this embodiment.

### II. A trigger-based measurement method provided in an embodiment of this application (a sensing measurement scenario including a sensing device)

### 1. Measurement sounding phase (measurement sounding phase)

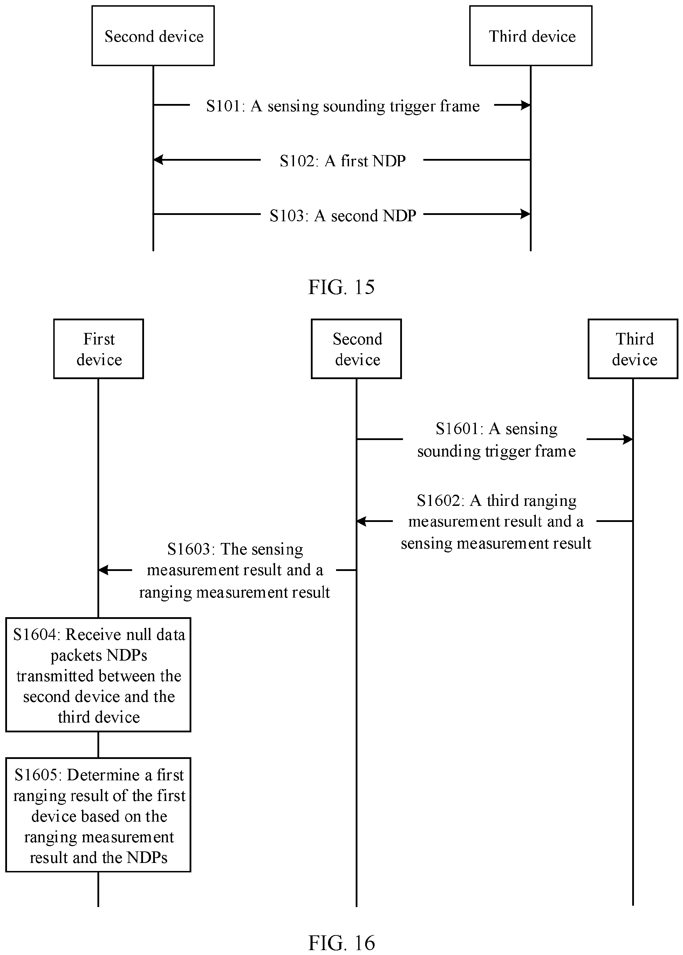

FIG. 15 is a schematic flowchart of a trigger-based measurement method according to this application. The measurement method is implemented through interaction between a second device and a third device, and includes the following steps.

S101: The second device sends a sensing sounding trigger frame to the third device.

S102: The third device sends a first NDP to the second device.

In this embodiment, the second device is a sensing AP, and the third device is a sensing non-AP STA. That is, the third device is a sensing device.

The sensing sounding trigger frame is used to trigger the third device to send the first null data packet NDP. The first NDP is used for sensing measurement. For example, in the sensing procedure shown in FIG. 2a, the AP may send a sensing sounding trigger frame to the sensing non-AP STA (that is, a sensing device). Correspondingly, the sensing device receives the sensing sounding trigger frame, and performs a corresponding sensing measurement procedure.

For example, for the sensing device, the sensing sounding trigger frame is used to trigger the third device to send a sensing NDP used for sensing measurement to the second device. That is, the first NDP is a sensing NDP. It may be understood that, the first NDP is a sensing NDP sent by the third device (for example, a sensing non-AP STA) to the second device (for example, a sensing AP), and the AP may measure the first NDP to obtain CSI of a channel from the non-AP STA to the AP. That is, the first NDP is used for sensing measurement.

In a possible implementation, the sensing sounding trigger frame carries first indication information, the first indication information is carried in a second field of a common information field of the sensing sounding trigger frame, and a value of the first indication information in the sensing sounding trigger frame is a first value. It may be understood that, the first indication information is indication information indicating a subtype of a sensing trigger frame (sensing trigger subtype), and is carried in a trigger dependent common information field. For example, the value of the first indication information in the sensing sounding trigger frame is 2 (that is, the first value is 2). When receiving the trigger frame, the third device may identify the trigger frame as a sensing sounding trigger frame.

In a possible implementation, the sensing sounding trigger frame carries a measurement setup identifier (measurement setup ID) used for sensing measurement and a measurement instance identifier (measurement instance ID) used for sensing measurement. Lengths (that is, occupied bits) of the measurement setup ID and the measurement instance ID are not limited in embodiments of this application. For example, it is assumed that the length of the measurement setup ID is 3 bits, and the length of the measurement instance ID is 5 bits.

In this embodiment, the third device is a sensing device. To be specific, the second device and the third device perform the trigger-based sensing measurement procedure shown in FIG. 2a. Because there is no ranging device, compatibility between the sensing sounding trigger frame and a ranging device may not be considered. For the sensing sounding trigger frame in this embodiment, a manner in which the foregoing information is carried in the sensing sounding trigger frame may include but is not limited to the following manners:
Manner 1: The measurement setup identifier is carried in a first field and/or the second field of the common information field of the sensing sounding trigger frame, or is carried in a user information field of the sensing sounding trigger frame.

For example, the measurement setup ID may be carried in a trigger dependent common information field of the sensing sounding trigger frame (as shown in FIG. 11, for example, may be carried in B5 to B7 in FIG. 11), or may be carried in the first field of the common information field of the sensing sounding trigger frame (as shown in FIG. 9, for example, may be carried in B54 to B62 in FIG. 9), or may be carried in the user information field of the sensing sounding trigger frame (as shown in FIG. 13, for example, may be carried in B12 to B20 in FIG. 13). In addition, a length of the trigger dependent common information field in Manner 1 is less than or equal to 8 bits. In other words, a length of the sensing sounding trigger frame is the same as a length of a ranging sounding trigger frame, and the length of the trigger dependent common information field is not extended. This helps avoid a case in which a ranging device cannot identify the sensing sounding trigger frame due to extension of the length of the sensing sounding trigger frame.

Optionally, when the measurement setup identifier is long, the measurement setup identifier may alternatively be carried in both the first field and the second field. For example, it is assumed that the length of the measurement setup ID is 5 bits, 3 bits are carried in the trigger dependent common information field of the sensing sounding trigger frame (for example, carried in B5 to B7 in FIG. 11), and the other 2 bits are carried in the first field of the common information field of the sensing sounding trigger frame (for example, carried in B54 and B55 in B54 to B62 in FIG. 9).

Manner 2: The measurement instance identifier is carried in a first field and/or the second field of the common information field of the sensing sounding trigger frame, or is carried in a user information field of the sensing sounding trigger frame.

For example, the measurement instance ID may be carried in a trigger dependent common information field of the sensing sounding trigger frame (as shown in FIG. 11, for example, may be carried in B5 to B7 in FIG. 11), or may be carried in the common information field of the sensing sounding trigger frame (as shown in FIG. 9, for example, may be carried in B54 to B62 in FIG. 9), or may be carried in the user information field of the sensing sounding trigger frame (as shown in FIG. 13, for example, may be carried in B12 to B20 in FIG. 13). In addition, a length of the trigger dependent common information field in Manner 2 is less than or equal to 8 bits. In other words, a length of the sensing sounding trigger frame is the same as a length of a ranging sounding trigger frame, and the length of the trigger dependent common information field is not extended. This helps avoid a case in which a ranging device cannot normally identify the sensing sounding trigger frame due to extension of the length of the sensing sounding trigger frame.

Optionally, when the measurement instance identifier is long, the measurement instance identifier may alternatively be carried in both the first field and the second field. For example, it is assumed that the length of the measurement instance ID is 5 bits, 3 bits are carried in the trigger dependent common information field of the sensing sounding trigger frame (for example, carried in B5 to B7 in FIG. 11), and the other 2 bits are carried in the first field of the common information field of the sensing sounding trigger frame (for example, carried in B54 and B55 in B54 to B62 in FIG. 9).

Manner 3: Both the measurement setup identifier and the measurement instance identifier are carried in the second field of the common information field of the sensing sounding trigger frame.

For example, in Manner 3, a trigger dependent common information field is extended from less than or equal to 8 bits to greater than or equal to 8 bits. In this case, both the measurement setup ID and the measurement instance ID may be carried in the trigger dependent common information field of the sensing sounding trigger frame.

S103: The second device sends a second NDP to the third device.

A sensing measurement result of the third device is determined based on the second NDP. For example, the second NDP is a sensing NDP sent by the second device (for example, a sensing AP) to the third device (for example, a sensing non-AP STA), and the non-AP STA may measure the second NDP to obtain CSI of a channel from the AP to the non-AP STA, that is, determine the sensing measurement result of the third device based on the second NDP.

Optionally, before the second device sends the second NDP to the third device, the method further includes the following step:
The second device sends a null data packet announcement NDPA to the third device, where the NDPA is used to notify the third device that the second device is to send the second NDP.

For example, in the sensing measurement process shown in FIG. 2a, the AP (the second device) may send an NDPA to the sensing non-AP STA (the third device). Correspondingly, the third device receives the NDPA. The NDPA is a sensing NDPA for a sensing device. The sensing NDPA is used to notify the third device that the second device is to send a sensing NDP used for sensing measurement.

In a possible implementation, the NDPA carries one or more of the following information:
an association identifier, where the association identifier is associated with a sensing device;
second indication information, where the second indication information indicates a sensing device to perform sensing measurement;
a measurement setup identifier used for sensing measurement; and
a measurement instance identifier used for sensing measurement.

For example, the NDPA in this embodiment is a sensing NDPA, and a manner in which the NDPA carries information may include but is not limited to the following manners:
Manner 1: The second indication information is carried in a user information field corresponding to a sensing device in the NDPA, or carried in a special user information field of the NDPA, or carried in a sounding dialog token field of the NDPA. The second indication information is a new type of indication information added in embodiments of this application. For specific descriptions, refer to descriptions of the second indication information in section 4 below.
Manner 2: The measurement setup identifier is carried in a user information field corresponding to a sensing device in the NDPA, or carried in a special user information field of the NDPA, or carried in a sounding dialog token field of the NDPA. For example, the NDPA may be in the frame format of the HE NDPA shown in FIG. 14, and a user information field (for example, a user information field 1) in the frame format is set to a user information field corresponding to a sensing device. In this case, the measurement setup ID may be carried in the user information field 1. For another example, the NDPA may be in the frame format of the HE NDPA shown in FIG. 14, and a special user information field is added between a sounding dialog token (sounding dialog token) field and a user information field. In this case, the measurement setup ID may be carried in the added special user information field. For another example, the NDPA may be in the frame format of the HE NDPA shown in FIG. 14. In this case, the measurement setup ID may be carried in a sounding dialog token field. For a sensing device, the sensing device identifies that the sounding dialog token field carries the measurement setup ID.
Manner 3: The measurement instance identifier is carried in a user information field corresponding to a sensing device in the NDPA, or carried in a special user information field of the NDPA, or carried in a sounding dialog token field of the NDPA. For example descriptions of the measurement instance ID, refer to the example descriptions of the measurement setup ID in Manner 2. Details are not described herein again.
Manner 4: The association identifier is carried in a user information field corresponding to a sensing device in the NDPA or carried in a special user information field of the NDPA. The user information field or the special user information field further includes the association identifier (association identifier, AID), and the association identifier is associated with a sensing device. For example, the AID in the user information field is associated with a sensing device corresponding to the user information field (for example, the AID is an ID of the corresponding sensing device). For another example, the AID in the special user information field may be associated with a sensing device. The AID herein is not an ID of a specific sensing device, but may be a special value, and may be read by a sensing device.

It can be learned that, in the measurement sounding phase (measurement sounding phase) in a sensing measurement scenario and a hybrid measurement scenario described in the foregoing embodiment, the second device (the AP) may perform sensing measurement and/or ranging measurement with both a sensing device and a ranging device, to improve efficiency of the AP. In addition, the sensing device may complete sensing measurement, ranging measurement, or sensing measurement and ranging measurement. A ranging function is added for the sensing device to enrich functions of the sensing device. In addition, the ranging device may transparently participate in a sensing procedure to complete ranging, and the AP does not need to initiate an additional ranging procedure.

### 2. Polling phase (polling phase) in a sensing measurement scenario and a hybrid measurement scenario

According to the descriptions in the embodiment in FIG. 2a, before the second device sends the sensing sounding trigger frame, the second device may further send a sensing polling trigger frame to the third device, so that the third device feeds back a first response frame for the sensing polling trigger frame, to confirm whether the third device can participate in a sensing measurement process. For example, before S101 shown in FIG. 15, the following steps may be further included.

S11: The second device sends a sensing polling trigger frame to the third device.

S12: The second device receives a first response frame from the third device for the sensing polling trigger frame, where the first response frame is used to confirm that the third device participates in sensing measurement.

In other words, after the AP sends the sensing polling trigger frame to the sensing device, if the sensing device confirms participation in sensing measurement, the sensing device may send the first response frame (for example, a CTS-to-self frame) to the AP, to notify the AP that the sensing device confirms participation in sensing measurement.

In a possible implementation, the sensing polling trigger frame carries first indication information, the first indication information is carried in a second field of a common information field of the sensing polling trigger frame, and a value of the first indication information in the sensing polling trigger frame is a second value. It may be understood that, the first indication information is indication information indicating a subtype of a sensing trigger frame (sensing trigger subtype), and is carried in a trigger dependent common information field. For example, the value of the first indication information in the sensing polling trigger frame is 1 (that is, the second value is 1). When receiving the trigger frame, the third device may identify the trigger frame as a sensing polling trigger frame.

In a possible implementation, the sensing polling trigger frame carries a measurement setup identifier (measurement setup ID) used for sensing measurement and a measurement instance identifier (measurement instance ID) used for sensing measurement. It may be understood that, because there is no ranging device, compatibility between the sensing polling trigger frame and a ranging device may not be considered. For the sensing polling trigger frame, a manner in which the foregoing information is carried in the sensing polling trigger frame may include but is not limited to the following manners:
Manner 1: The measurement setup identifier is carried in a first field and/or the second field of the common information field of the sensing polling trigger frame. For example, the measurement setup ID may be carried in a token field of a trigger dependent common information field of the sensing polling trigger frame (as shown in FIG. 11, for example, may be carried in B5 to B7 in FIG. 11), or may be carried in the common information field of the sensing polling trigger frame (as shown in FIG. 9, for example, may be carried in B54 to B62 in FIG. 9).
   Optionally, when the measurement setup identifier is long, the measurement setup identifier may alternatively be carried in both the first field and the second field. For a specific example, refer to corresponding descriptions in the foregoing embodiments. Details are not described herein again.
Manner 2: The measurement instance identifier is carried in a first field or the second field of the common information field of the sensing polling trigger frame. For example, the measurement instance ID may be carried in a token field of a trigger dependent common information field of the sensing polling trigger frame (as shown in FIG. 11, for example, may be carried in B5 to B7 in FIG. 11), or may be carried in the common information field of the sensing polling trigger frame (as shown in FIG. 9, for example, may be carried in B54 to B62 in FIG. 9).
   Optionally, when the measurement instance identifier is long, the measurement instance identifier may alternatively be carried in both the first field and the second field. For a specific example, refer to corresponding descriptions in the foregoing embodiments. Details are not described herein again.
Manner 3: Both the measurement setup identifier and the measurement instance identifier are carried in the second field of the common information field of the sensing polling trigger frame.

For example, in Manner 3, a trigger dependent common information field is extended from less than or equal to 8 bits to greater than or equal to 8 bits. In this case, both the measurement setup ID and the measurement instance ID may be carried in the trigger dependent common information field of the sensing polling trigger frame.

### 3. Feedback phase (feedback phase) in a sensing measurement scenario and a hybrid measurement scenario

According to the descriptions in the embodiment in FIG. 2a, after the second device sends the sensing sounding trigger frame, the second device may further send a sensing reporting trigger frame to the third device, to trigger the third device to feed back a sensing measurement result of the third device to the second device.

For example, after S103 shown in FIG. 15, the following steps may be further included.

S21: The second device sends a sensing reporting trigger frame to the third device.

S22: The second device receives a second response frame from the third device for the sensing reporting trigger frame, where the second response frame includes a sensing measurement result of the third device.

In this embodiment, the third device is a sensing device (a ranging device does not accept the reporting trigger frame). Therefore, there is no need to consider compatibility between the sensing reporting trigger frame and a ranging device.

In a possible implementation, the sensing reporting trigger frame carries first indication information, the first indication information is carried in a second field of a common information field of the sensing reporting trigger frame, and a value of the first indication information in the sensing reporting trigger frame is a third value. It may be understood that, the first indication information is indication information indicating a subtype of a sensing trigger frame (sensing trigger subtype), and is carried in a trigger dependent common information field. For example, the value of the first indication information in the sensing reporting trigger frame is 3 (that is, the third value is 3). When receiving the trigger frame, the third device may identify the trigger frame as a sensing reporting trigger frame.

The sensing reporting trigger frame carries a measurement setup identifier (measurement setup ID) used for sensing measurement and a measurement instance identifier (measurement instance ID) used for sensing measurement. For the sensing reporting trigger frame, a manner in which the foregoing information is carried in the sensing reporting trigger frame may include but is not limited to the following manners:
Manner 1: The measurement setup identifier is carried in a first field or the second field of the common information field of the sensing reporting trigger frame, or is carried in a user information field of the sensing reporting trigger frame.
   For example, the measurement setup ID may be carried in a trigger dependent common information field of the sensing reporting trigger frame (as shown in FIG. 11, for example, may be carried in B5 to B7 in FIG. 11), or may be carried in the first field of the common information field of the sensing reporting trigger frame (as shown in FIG. 9, for example, may be carried in B54 to B62 in FIG. 9), or may be carried in the user information field of the sensing reporting trigger frame (as shown in FIG. 13, for example, may be carried in B12 to B20 in FIG. 13).
Manner 2: The measurement instance identifier is carried in a first field or the second field of the common information field of the sensing reporting trigger frame, or is carried in a user information field of the sensing reporting trigger frame.
   For example, the measurement instance ID may be carried in a trigger dependent common information field of the sensing sounding trigger frame (as shown in FIG. 11, for example, may be carried in B5 to B7 in FIG. 11), or may be carried in the common information field of the sensing sounding trigger frame (as shown in FIG. 9, for example, may be carried in B54 to B62 in FIG. 9), or may be carried in the user information field of the sensing sounding trigger frame (as shown in FIG. 13, for example, may be carried in B12 to B20 in FIG. 13).
Manner 3: Both the measurement setup identifier and the measurement instance identifier are carried in the second field of the common information field of the sensing reporting trigger frame.

For example, in Manner 3, a trigger dependent common information field is extended from less than or equal to 8 bits to greater than or equal to 8 bits. In this case, both the measurement setup ID and the measurement instance ID may be carried in the trigger dependent common information field of the sensing reporting trigger frame.

### 4. Second indication information in the polling phase, the measurement phase, and the feedback phase

The second indication information is indication information for a sensing device in embodiments of this application. The second indication information indicates the sensing device to perform sensing measurement.

A sensing trigger frame carries the second indication information, and the sensing trigger frame is the sensing sounding trigger frame, the sensing polling trigger frame, or the sensing reporting trigger frame described in the foregoing embodiments. In other words, the sensing sounding trigger frame, the sensing polling trigger frame, or the sensing reporting trigger frame described in the foregoing embodiments each may carry the second indication information. Specifically, the second indication information is carried in a user information field of the sensing trigger frame, or a first field or a second field of a common information field of the sensing trigger frame.

For example, the second indication information may be indicated by using 1 bit. When the 1 bit is set to 0, the sensing device is indicated to perform sensing measurement. When the 1 bit is set to 1, the meaning of the 1 bit is not limited in this embodiment (for example, in the following embodiments, the sensing device may be indicated to perform ranging measurement). When the second indication information is indicated by using 1 bit, the 1 bit may be carried in B63 in the common information field of the sensing trigger frame (including the sensing polling trigger frame, the sensing sounding trigger frame, and the sensing reporting trigger frame). Alternatively, the 1 bit may be carried in B4 in a trigger dependent common information field of the sensing trigger frame. Alternatively, the 1 bit may be carried in B39 in the user information field of the sensing trigger frame.

### III. Another trigger-based measurement method provided in an embodiment of this application (a ranging measurement scenario including a sensing device and a hybrid measurement scenario including a sensing device and a ranging device)

For steps of the measurement method in this embodiment, refer to steps S101 to S103 of the trigger-based measurement method described in the embodiment in FIG. 15, and descriptions of the sensing polling trigger frame, the sensing sounding trigger frame, the sensing reporting trigger frame, and the like. A difference lies in that a sensing trigger frame (for example, including a sensing polling trigger frame, a sensing sounding trigger frame, a sensing reporting trigger frame, and the like) in the measurement method in this embodiment may be identified by a ranging device as a ranging trigger frame in a hybrid measurement scenario including a sensing device and a ranging device, so that the ranging device can perform ranging measurement based on the sensing trigger frame, to implement hybrid measurement based on the sensing trigger frame. In addition, the sensing trigger frame in the measurement method in this embodiment may be further used by a sensing device to perform ranging measurement, to enrich functions of the sensing device.

In this embodiment, a second device is a sensing AP, and a third device is a sensing non-AP STA or a ranging non-AP STA. That is, the third device may be a sensing device or a ranging device. In embodiments of this application, when the third device is a sensing device, the sensing device may perform sensing measurement, ranging measurement, or sensing measurement and ranging measurement.

The following describes differences between this embodiment and the embodiment in FIG. 15.
1. A sensing sounding trigger frame is used to trigger the third device to send a first null data packet NDP. The first NDP is used for ranging measurement, or sensing measurement and ranging measurement.

For example, in the hybrid measurement procedure of sensing and ranging shown in FIG. 4, the AP may send a sensing sounding trigger frame to a sensing non-AP STA (that is, a sensing device) and a ranging non-AP STA (that is, a ranging device). Correspondingly, the sensing device and the ranging device receive the sensing sounding trigger frame, and separately perform a corresponding measurement procedure.

Case 1: When the third device is a sensing device and the third device is configured to perform ranging measurement, the sensing sounding trigger frame is used to trigger the third device to send a first NDP to the second device. That is, the first NDP is a sensing NDP. However, the sensing NDP may carry information used for ranging measurement, so that the sensing device performs ranging measurement based on the first NDP.

Case 2: In a hybrid measurement scenario, the third device may be considered to include a sensing device and a ranging device. The sensing sounding trigger frame is used to trigger the sensing device to send a sensing NDP to the second device, and is used to trigger the ranging device to send a ranging NDP to the second device. That is, for the ranging device, the ranging device actually considers the sensing sounding trigger frame as a ranging sounding trigger frame, and then performs ranging measurement.

For the performing of ranging measurement described in Case 1 and Case 2, refer to the ranging measurement procedure described in FIG. 3a. Details are not described herein again.

2. The sensing sounding trigger frame carries a measurement setup identifier (measurement setup ID) used for sensing measurement and a measurement instance identifier (measurement instance ID) used for sensing measurement. In this embodiment, the third device may be a ranging device. To be specific, the second device and the third device perform the hybrid procedure shown in FIG. 4. Because there is a ranging device, compatibility between the sensing sounding trigger frame and the ranging device needs to be considered. Lengths (that is, occupied bits) of the measurement setup ID and the measurement instance ID are not limited in embodiments of this application. For example, it is assumed that the length of the measurement setup ID is 3 bits, and the length of the measurement instance ID is 5 bits.

The measurement setup identifier and the measurement instance identifier are carried in a user information field or a common information field of the sensing sounding trigger frame. For example, the measurement setup ID and the measurement instance ID may be carried in the common information field of the sensing sounding trigger frame (as shown in FIG. 9, for example, may be carried in B54 to B62 in FIG. 9), or may be carried in the user information field of the sensing sounding trigger frame (as shown in FIG. 13, for example, may be carried in B12 to B20 in FIG. 13). It should be noted that, in consideration of compatibility with the ranging device, a trigger dependent common information field (for example, a token field) of the sensing sounding trigger frame that can be identified by the ranging device cannot carry information used for sensing measurement.

3. The second device sends a null data packet announcement NDPA to the third device, where the NDPA is used to notify the third device that the second device is to send a second NDP. A sensing measurement result or a ranging measurement result of the third device is determined based on the second NDP.

The following cases are included.

Case 1: When the third device is a sensing device and the third device needs to perform ranging measurement, or when the third device is a ranging device and the third device needs to perform ranging measurement, the third device may identify the NDPA as an NDPA used for ranging measurement. When receiving the second NDP, the sensing device may measure the second NDP, and determine the ranging measurement result of the third device.

Case 2: When the third device is a sensing device and the third device needs to perform sensing measurement, the NDPA is used to notify the third device that the second device is to send a sensing NDP used for sensing measurement. When receiving the second NDP, the sensing device may measure the second NDP to obtain CSI of a channel from the AP to the non-AP STA, that is, determine the sensing measurement result of the third device based on the second NDP.

In a possible implementation, the NDPA carries one or more of the following information:
an association identifier, where the association identifier is associated with a sensing device;
second indication information, where the second indication information indicates a sensing device to perform sensing measurement;
a measurement setup identifier used for sensing measurement;
a measurement instance identifier used for sensing measurement; and
a token (token) value used for ranging measurement.

It can be learned that, compared with the NDPA in the embodiment in FIG. 15, the NDPA in this embodiment may further carry information (for example, a token value) related to ranging measurement.

In a hybrid scenario including a sensing device and a ranging device, compatibility with the ranging device needs to be considered in a design of the NDPA. For example, a manner in which the NDPA carries information may include but is not limited to the following manners:
Manner 1: The second indication information is carried in a user information field corresponding to a sensing device in the NDPA, or carried in a special user information field of the NDPA, or carried in a sounding dialog token field of the NDPA. The second indication information is a new type of indication information added in embodiments of this application. For specific descriptions, refer to descriptions of the second indication information in section 4 below.
Manner 2: The measurement setup identifier is carried in a user information field corresponding to a sensing device in the NDPA, or carried in a special user information field of the NDPA, or carried in a sounding dialog token field of the NDPA. For example, the NDPA may be in the frame format of the HE NDPA shown in FIG. 14, and a user information field (for example, a user information field 1) in the frame format is set to a user information field corresponding to a sensing device. In this case, the measurement setup ID may be carried in the user information field 1. For another example, the NDPA may be in the frame format of the HE NDPA shown in FIG. 14, and a special user information field is added between a sounding dialog token (sounding dialog token) field and a user information field. In this case, the measurement setup ID may be carried in the added special user information field. For another example, the NDPA may be in the frame format of the HE NDPA shown in FIG. 14. In this case, the measurement setup ID may be carried in a sounding dialog token field. For a sensing device, the sensing device identifies that the sounding dialog token field carries the measurement setup ID. A ranging device identifies that the sounding dialog token field carries a sounding dialog token of the ranging device.
Manner 3: The measurement instance identifier is carried in a user information field corresponding to a sensing device in the NDPA, or carried in a special user information field of the NDPA, or carried in a sounding dialog token field of the NDPA. For example descriptions of the measurement instance ID, refer to the example descriptions of the measurement setup ID in Manner 2. Details are not described herein again.
Manner 4: The association identifier is carried in a user information field corresponding to a sensing device in the NDPA or carried in a special user information field of the NDPA. The user information field or the special user information field further includes the association identifier (association identifier, AID), and the association identifier is associated with a sensing device. For example, the AID in the user information field is associated with a sensing device corresponding to the user information field (for example, the AID is an ID of the corresponding sensing device). For another example, the AID in the special user information field may be associated with a sensing device. The AID herein is not an ID of a specific sensing device, but may be a special value, and may be read by a sensing device.
Manner 5: The token (token) value used for ranging measurement is carried in a user information field corresponding to a ranging device in the NDPA. For example, the NDPA may be in the frame format of the HE NDPA shown in FIG. 14, and a user information field (for example, a user information field 2) in the frame format is set to a user information field corresponding to a ranging device. In this case, the token value may be carried in the user information field 2.

That a sensing measurement result or a ranging measurement result of the third device is determined based on the second NDP includes the following cases:
For example, the second NDP is a sensing NDP sent by the second device (for example, a sensing AP) to the third device (for example, a sensing non-AP STA), and the non-AP STA may measure the second NDP to obtain CSI of a channel from the AP to the non-AP STA, that is, determine the sensing measurement result of the third device based on the second NDP.

For another example, the second NDP is a sensing NDP sent by the second device (for example, a sensing AP) to the third device (for example, a ranging non-AP STA), and in this embodiment, it is assumed that the sensing NDP is in a same format as a ranging NDP and may also carry information indicating ranging. In this case, the ranging non-AP STA may measure the second NDP to obtain CSI of a channel from the AP to the non-AP STA, that is, determine the ranging measurement result of the third device based on the second NDP.

4. Because the third device may be a sensing device or a ranging device, the second device sends a sensing polling trigger frame to the third device, so that the third device feeds back a first response frame for the sensing polling trigger frame, to confirm whether the third device can participate in a sensing measurement process or a ranging measurement process. A polling phase in this embodiment may be described by using the following examples.

Example 1: Before the second device sends the sensing sounding trigger frame to the third device, the following steps may be further included.

S31: The second device sends a sensing polling trigger frame to the third device.

S32: The second device receives a first response frame from the third device for the sensing polling trigger frame, where the first response frame is used to confirm that the third device participates in ranging measurement.

That is, the third device in this example is a sensing device or a ranging device. When the third device is a sensing device, the sensing device is further configured to perform ranging measurement.

Example 2: Before the second device sends the sensing sounding trigger frame to the third device, the following steps may be further included.

S41: The second device sends a sensing polling trigger frame to the third device.

S42: The second device receives a first response frame from the third device for the sensing polling trigger frame, where the first response frame is used to confirm that the third device participates in sensing measurement and ranging measurement.

That is, the third device in this example includes a sensing device and a ranging device (a hybrid measurement scenario). A first response frame fed back by the sensing device to the second device is used to confirm that the sensing device participates in the sensing measurement and the ranging measurement, and a first response frame fed back by the ranging device to the second device is used to confirm that the ranging device participates in the ranging measurement.

In a possible implementation, the sensing polling trigger frame carries first indication information, the first indication information is carried in a second field of a common information field of the sensing polling trigger frame, and a value of the first indication information in the sensing polling trigger frame is a second value. It may be understood that, the first indication information is indication information indicating a subtype of a sensing trigger frame (sensing trigger subtype), and is carried in a trigger dependent common information field. For example, the value of the first indication information in the sensing polling trigger frame is 1 (that is, the second value is 1). When receiving the trigger frame, the third device may identify the trigger frame as a sensing polling trigger frame.

In a possible implementation, when the second device and the third device perform the hybrid measurement procedure shown in FIG. 4, because there is a ranging device, compatibility between the sensing polling trigger frame and the ranging device needs to be considered. The sensing polling trigger frame carries a measurement setup identifier (measurement setup ID) used for sensing measurement, a measurement instance identifier (measurement instance ID) used for sensing measurement, and a token (token) value used for ranging. Lengths (that is, occupied bits) of the measurement setup ID and the measurement instance ID are not limited in embodiments of this application. For example, it is assumed that the length of the measurement setup ID is 3 bits, and the length of the measurement instance ID is 5 bits.

The measurement setup identifier and the measurement instance identifier are carried in a common information field of the sensing polling trigger frame. For example, the measurement setup ID and the measurement instance ID may be carried in the common information field of the sensing polling trigger frame (as shown in FIG. 9, for example, may be carried in B54 to B62 in FIG. 9). It should be noted that, in consideration of compatibility with the ranging device, a trigger dependent common information field (for example, a token field) of the sensing polling trigger frame that can be identified by the ranging device cannot carry information used for sensing measurement. The trigger dependent common information field (for example, the token field) carries the token (token) value used for ranging. In other words, a carrying manner is the same as a carrying manner of an existing ranging polling trigger frame. This helps the ranging device obtain information used for ranging.

5. In this embodiment, a sensing trigger frame (for example, including a sensing polling trigger frame, a sensing sounding trigger frame, a sensing reporting trigger frame, and the like) also includes the second indication information described in the foregoing embodiments. The second indication information in this embodiment indicates a sensing device to perform sensing measurement, or may indicate the sensing device to perform ranging measurement or perform sensing measurement and ranging measurement. Specifically, the second indication information is carried in a user information field of the sensing trigger frame, or a first field or a second field of a common information field of the sensing trigger frame.

For example, the second indication information may be indicated by using 1 bit. When the 1 bit is set to 0, the sensing device is indicated to perform sensing measurement. When the 1 bit is set to 1, the sensing device is indicated to perform ranging measurement. When the second indication information is indicated by using 1 bit, the 1 bit may be carried in B63 in the common information field of the sensing trigger frame (including the sensing polling trigger frame, the sensing sounding trigger frame, and the sensing reporting trigger frame). Alternatively, the 1 bit may be carried in B4 in a trigger dependent common information field of the sensing trigger frame. Alternatively, the 1 bit may be carried in B39 in the user information field of the sensing trigger frame.

For another example, the second indication information may be indicated by using 2 bits. When the 2 bits are set to 00, the sensing device is indicated to perform sensing measurement. When the 2 bits are set to 01, the sensing device is indicated to perform ranging measurement. When the 2 bits are set to 10, the sensing device is indicated to perform sensing measurement and ranging measurement. When the second indication information is indicated by using 2 bits, the 2 bits may be carried in B54 to B62 in the common information field of the sensing trigger frame (including the sensing polling trigger frame, the sensing sounding trigger frame, and the sensing reporting trigger frame), or carried in B12 to B20 in the user information field of the sensing sounding trigger frame.

It should be noted that, sensing measurement in "II" and "III" is sensing measurement in a non-proxy mode, and ranging is non-passive ranging. The following further describes a solution combining sensing measurement in a proxy mode with passive ranging related to this application.

It should be noted that, in embodiments of this application, a device supporting sensing (Sensing) may be briefly referred to as a sensing device, and a device supporting ranging (Ranging) may be briefly referred to as a ranging device. It should be noted that, in embodiments of this application, a ranging measurement result may be briefly referred to as a ranging result, and a sensing measurement result may be briefly referred to as a sensing result. It should be noted that, in embodiments of this application, an NDP may be briefly referred to as a ranging NDP when being used for ranging, and may be briefly referred to as a sensing NDP when being used for sensing. It should be noted that, in a hybrid procedure of sensing and ranging, a ranging NDP and a sensing NDP may be a same NDP. In other words, the sensing NDP and the ranging NDP need to be designed to be identified by the sensing device and the ranging device. It should be noted that, in embodiments of this application, listening may also be described as monitoring or receiving. This is not limited herein. It should be noted that, in embodiments of this application, an arrival time may also be described as a receiving time. This is not limited herein.

It should be noted that, with rapid development of mobile communication and Internet technologies, people have increasing demands for sensing (Sensing) services and ranging (Ranging) services based on wireless local area networks (wireless local area networks, WLANs). Sensing is to use currently widely deployed WLAN infrastructure (for example, a WLAN device or an access point (access point, AP)) and/or stations (non-AP station, non-AP STA) to send a null data packet (null data packet, NDP) used for sensing to sense a surrounding environment, and use a specific algorithm to extract a corresponding parameter from a received signal for analysis to obtain related information (that is, a sensing measurement result) in the surrounding environment. Ranging means that two communication parties implement measurement for a distance (briefly referred to as ranging) between two devices by sending NDPs used for ranging, to perform high-precision location estimation.

Sensing by proxy (Sensing by proxy, SBP) measurement means that a non-AP STA sends a proxy request to request an AP to initiate a sensing procedure on behalf of the non-AP STA, and the AP feeds back a sensing measurement result between the AP and another non-AP STA (that is, a station participating in NDP transmission) to the non-AP STA initiating the proxy request, so that the non-AP STA can sense a surrounding environment. In a passive ranging process, if a non-AP STA, referred to as a passive station (Passive STA, PSTA), wants to obtain its own location based on a ranging procedure between an AP and another non-AP STA. The PSTA listens to an NDP that is used for ranging and that is transmitted between the AP and the another non-AP STA (a station participating in NDP sending). In addition, after the AP completes ranging with the another non-AP STA (the station participating in NDP sending), the AP sends a ranging trigger location measurement report frame (TF Ranging LMR) to the another non-AP STA. After receiving the frame, the another non-AP STA feeds back a ranging result on the non-AP STA side to the AP. In this case, the AP may send a ranging result between the AP and the another non-AP STA to the PSTA through broadcast, and then the PSTA obtains its own location based on a listening result of the PSTA. Currently, in a conventional technology, how to combine an SBP procedure with a passive ranging procedure is not discussed, and specific details of combining the SBP procedure with the passive ranging procedure are not discussed.

In view of this, this application provides a measurement method, to combine an SBP procedure with a passive ranging procedure, so that a device initiating SBP can implement sensing and/or passive ranging, and a passive ranging device can transparently participate in a sensing by proxy measurement process and complete passive ranging.

It should be noted that, in this application, a second ranging measurement result may be understood as a ranging measurement result on a second device side, and a third ranging measurement result may be understood as a ranging measurement result on a third device side. For example, in FIG. 3a, the second device is equivalent to the AP in FIG. 3a, and the third device is equivalent to the non-AP STA in FIG. 3a. The second ranging measurement result is a ranging measurement result on the AP side, that is, t2 and t3, and the third ranging measurement result is a ranging measurement result on the non-AP STA side, that is, t1 and t4.

It should be noted that, a first device in the following embodiments of this application may be an SBP initiator. Alternatively, the first device may include an SBP initiator and a PSTA. In other words, both an SBP initiator and a PSTA are present in a communication system. For ease of description, the first device in an embodiment corresponding to FIG. 16 is mainly described by using an SBP initiator as an example. When the first device includes an SBP initiator, according to the method in embodiments of this application, an SBP procedure may be combined with a passive ranging procedure, so that the device initiating SBP can implement sensing and/or passive ranging. When the first device includes an SBP initiator and a PSTA, according to the method in embodiments of this application, an SBP procedure may be combined with a passive ranging procedure, so that the device initiating SBP can implement sensing and/or passive ranging, and the passive ranging device can transparently participate in a sensing by proxy measurement process and complete passive ranging. It should be noted that, that the PSTA transparently participates in the sensing by proxy measurement process and completes the passive ranging may be understood as follows: The PSTA may perform ranging by using a proxy sensing procedure, and the AP does not need to initiate an additional passive ranging procedure.

It should be noted that, a second device in the following embodiments of this application may be an AP.

It should be noted that, a third device in the following embodiments of this application may be a sensing device or a ranging device. Alternatively, the third device includes a sensing device and a ranging device. In other words, both a sensing device and a ranging device are present in a communication system.

It should be noted that, in FIG. 16, when the third device is a sensing device and the sensing device performs sensing measurement, for a communication procedure between the third device and the second device and designs of frame formats of various frames (for example, a sensing polling trigger frame, a sensing sounding trigger frame, and a sensing reporting trigger frame) used in the communication, reference may be made to content described in "II". When the third device is a sensing device and the sensing device performs ranging measurement, or when the third device includes a sensing device and a ranging device, the sensing device performs sensing measurement, and the ranging device performs ranging measurement, for a communication procedure between the third device and the second device and designs of frame formats of various frames used in the communication, reference may be made to content described in "III".

The following describes in detail a measurement method and a measurement apparatus provided in this application.

FIG. 16 is a schematic flowchart of another measurement method according to this application. As shown in FIG. 16, the measurement method includes the following steps S1601 to S1605.

S1601: A second device sends a sensing sounding trigger frame to a third device.

In some feasible implementations, in a measurement sounding phase, the second device may send the sensing sounding trigger frame to the third device. The sensing sounding trigger frame is used to trigger the third device to transmit a null data packet NDP, and the NDP may be used to determine a sensing measurement result and a ranging measurement result. In other words, the sensing sounding trigger frame may be used to trigger sensing measurement and ranging measurement between the second device and the third device. Specifically, for a process of triggering ranging measurement between the second device and the third device based on the sensing sounding trigger frame, reference may be made to FIG. 2a. After the third device (equivalent to the non-AP STA in FIG. 2a) receives the sensing sounding trigger frame from the second device (equivalent to the AP in FIG. 2a), the third device sends an NDP to the second device. After receiving the NDP, the second device sends an NDPA and another NDP to the third device. Correspondingly, the third device receives the NDPA and the another NDP from the second device.

It should be noted that, the ranging measurement result in the method in FIG. 16 includes a second ranging measurement result and a third ranging measurement result. The second ranging measurement result is obtained by the second device through measurement based on the transmitted NDPs, and the third ranging measurement result is obtained by the third device through measurement based on the transmitted NDPs. Specifically, FIG. 7a and FIG. 7b are used as an example. The second ranging measurement result includes an arrival time t2 at which the second device receives the NDP from the third device and a sending time t3 at which the second device sends the NDP to the third device. The third ranging measurement result includes a sending time t1 at which the third device sends the NDP to the second device and an arrival time t4 at which the third device receives the NDP from the second device.

It should be noted that, for a first device, when the second device and the third device transmit NDPs bidirectionally, the first device may obtain, through listening, the bidirectionally transmitted NDPs, and obtain arrival time of the two NDPs accordingly. In other words, the first device may detect the NDP sent by the second device to the second device, and may determine an arrival time t6 at which the NDP arrives at the first device. Correspondingly, the first device may also detect the NDP sent by the third device to the second device, and may determine an arrival time t5 at which the NDP arrives at the first device.

It should be noted that, when the third device includes a sensing device, the sensing device may perform sensing measurement, ranging measurement, or sensing measurement and ranging measurement. When the third device includes a ranging device, the ranging device may perform ranging measurement. When the third device includes a sensing device, the third device may obtain a sensing measurement result by performing sensing measurement. Specifically, the sensing measurement result includes channel state information (channel state information, CSI) and the like. This is not limited herein.

S1602: The second device receives the third ranging measurement result and the sensing measurement result from the third device.

In some feasible implementations, when the third device includes only a sensing device and the sensing device is indicated to perform both sensing measurement and ranging measurement, or when the third device includes a sensing device and a ranging device, the sensing device is indicated to perform sensing measurement, and the ranging device performs ranging measurement, or when the third device includes a sensing device and a ranging device, the sensing device is indicated to perform sensing measurement and ranging measurement, and the ranging device performs ranging measurement, the third device may obtain a sensing measurement result after performing sensing measurement, and obtain a ranging measurement result (that is, the third ranging measurement result) on the third device side after performing ranging measurement. Based on this, the third device may send the third ranging measurement result and the sensing measurement result to the second device. Correspondingly, the second device receives the third ranging measurement result and the sensing measurement result from the third device.

Optionally, when the first device includes an SBP initiator, or when the first device includes an SBP initiator and a PSTA, the SBP initiator in the first device may send a proxy request to the second device. The proxy request is used to request the second device to perform sensing measurement and ranging measurement on behalf of the first device.

S1603: The second device sends the sensing measurement result and the ranging measurement result to the first device, and correspondingly, the first device receives the sensing measurement result and the ranging measurement result from the second device.

In some feasible implementations, when the third device includes only a sensing device and the sensing device is indicated to perform both sensing measurement and ranging measurement, or when the third device includes a sensing device and a ranging device, the sensing device is indicated to perform sensing measurement, and the ranging device performs ranging measurement, or when the third device includes a sensing device and a ranging device, the sensing device is indicated to perform sensing measurement and ranging measurement, and the ranging device performs ranging measurement, the second device may obtain a ranging measurement result (that is, the second ranging measurement result) on the second device side after performing ranging measurement. Therefore, after receiving the third ranging measurement result and the sensing measurement result from the third device, the second device may integrate the second ranging measurement result measured by the second device and the third ranging measurement result received from the third device to generate a ranging measurement result including the second ranging measurement result and the third ranging measurement result, and send, to the first device, the received sensing measurement result and the ranging measurement result (the ranging measurement result includes the second ranging measurement result and the third ranging measurement result) obtained through integration. Correspondingly, the first device receives the sensing measurement result and the ranging measurement result from the second device. The ranging measurement result is used to assist the first device in determining a first ranging measurement result of the first device, so that the first device can determine a location of the first device and the like based on the first ranging measurement result.

The sensing measurement result and the ranging measurement result are carried in a same frame, or the sensing measurement result and the ranging measurement result are carried in different frames. When the sensing measurement result and the ranging measurement result are carried in different frames, the sensing measurement result may be sent in unicast, and the ranging measurement result may be sent in broadcast.

S1604: The first device receives null data packets NDPs transmitted between the second device and the third device.

In some feasible implementations, the first device receives the null data packets NDPs transmitted between the second device and the third device. It should be noted that, for an understanding of receiving, by the first device, the null data packets NDPs transmitted between the second device and the third device herein, reference may be made to the foregoing descriptions in S1601 that the first device may obtain, through listening, the bidirectionally transmitted NDPs. Details are not described herein again.

S1605: The first device determines the first ranging measurement result of the first device based on the ranging measurement result and the NDPs.

In some feasible implementations, the first device may determine the first ranging measurement result of the first device based on the ranging measurement result and the NDPs. Specifically, that the first device determines the first ranging measurement result of the first device based on the ranging measurement result and the NDPs may be understood as follows: The first device determines the first ranging measurement result of the first device based on the ranging measurement result (that is, the second ranging measurement result and the third ranging measurement result) and receiving time (that is, t5 and t6) of the NDPs. That is, the first ranging measurement result includes t1 to t6. Further, the first device may determine its own location based on the first ranging measurement result, that is, implement positioning of the first device.

It should be noted that, a sequence of numbers of the steps in the embodiment shown in FIG. 16 does not indicate a sequence of performing the steps, and the performing sequence is specifically determined according to an actual application scenario. This is not limited herein.

It should be noted that, steps S1601 to S 1603 in the embodiment shown in FIG. 16 may be used as an independent embodiment, or may be used as optional steps to be combined with one or more steps in embodiments of this application. This is not limited herein. Steps S1603 to S1605 in the embodiment shown in FIG. 16 may be used as an independent embodiment, or may be used as optional steps to be combined with one or more steps in embodiments of this application. This is not limited herein.

It should be noted that, before step S1601, the second device may further send a sensing polling trigger frame to the third device. Optionally, after step S1601, the second device may further send a sensing reporting trigger frame to the third device.

It should be noted that, when the third device includes a sensing device, and the sensing device performs sensing measurement and/or the sensing device performs ranging measurement, for designs of frame structures of various frames (that is, a sensing polling trigger frame, a sensing sounding trigger frame, and a sensing reporting trigger frame) in FIG. 16, reference may be made to designs of frame structures of various frames used when the sensing device performs sensing measurement and/or ranging measurement in "II" and "III". Details are not described herein again.

It should be noted that, when the third device includes a sensing device and a ranging device, the sensing device performs sensing measurement, and the ranging device performs ranging measurement, for designs of frame structures of various frames (that is, a sensing polling trigger frame, a sensing sounding trigger frame, and a sensing reporting trigger frame) in FIG. 16, reference may be made to designs of frame structures of various frames in the hybrid measurement scenario of the sensing device and the ranging device in "III". Details are not described herein again.

It should be noted that, a design of a frame structure of the sensing sounding trigger frame in FIG. 16 has the following two differences from a design of a frame structure of the sensing sounding trigger frame in "II" and "III".
1. The sensing sounding trigger frame in FIG. 16 carries first indication information, the first indication information is carried in a second field of the sensing sounding trigger frame, a value of the first indication information is a first value, and the first value may be 4. In the design of the frame structure of the sensing sounding trigger frame in "II" and "III", a value of first indication information is a first value, and the first value is 2.
2. A difference from the design in which the length of the trigger dependent common information field of the sensing sounding trigger frame is 8 bits in the hybrid measurement scenario of the sensing device and the ranging device in "III" lies in that, in FIG. 16 of this application, when the third device includes a sensing device and a ranging device (that is, in a hybrid measurement scenario of a sensing device and a ranging device), a measurement setup identifier used for sensing measurement and a measurement instance identifier used for sensing measurement that are carried in the corresponding sensing sounding trigger frame are carried in the second field of the sensing sounding trigger frame, the second field is a trigger dependent common information field, and a length of the trigger dependent common information field is 16 bits. Further, in FIG. 16 of this application, last 6 bits in the 16 bits of the trigger dependent common information field should be fixed as a sounding dialog token number (sounding dialog token number) field. In other words, in the hybrid measurement scenario of the sensing device and the ranging device, the last 6 bits in the 16 bits should be fixed as the sounding dialog token number (sounding dialog token number) field, so that the sensing device can identify information used for sensing, and normal operation of the ranging device is not affected.

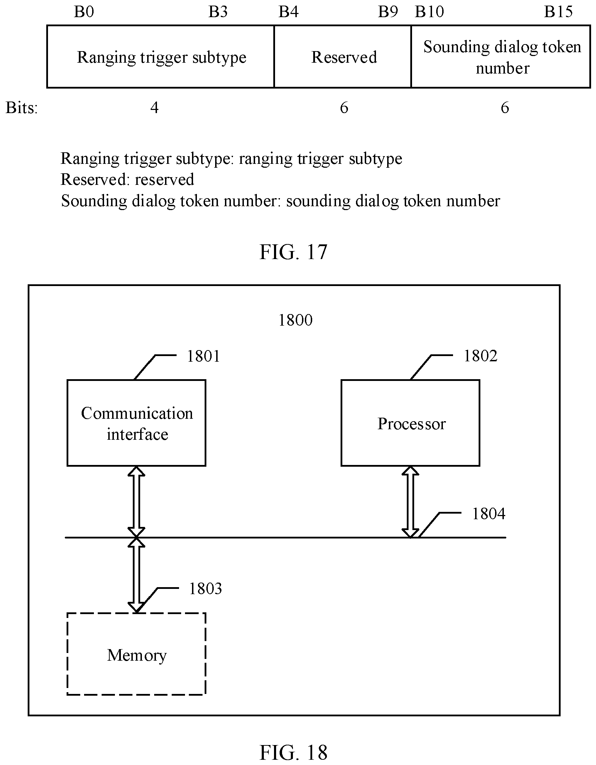

For example, FIG. 17 is a diagram of a structure of a trigger dependent common information field of a ranging sounding trigger frame corresponding to passive ranging according to an embodiment of this application. As shown in FIG. 17, a sounding dialog token number field and/or a reserved field of the ranging trigger frame for passive ranging may be used to carry a measurement setup ID and a measurement instance ID that are used for sensing. When receiving the frame, a sensing device interprets the frame as a measurement setup ID and a measurement instance ID. When receiving the frame, a ranging device interprets last 6 bits as a sounding dialog token number of the ranging device.

In an embodiment corresponding to FIG. 17, there is no limitation on a quantity of bits of the measurement setup ID and/or a quantity of bits of the measurement instance ID, but 6 bits of B10 to B 15 in the ranging sounding trigger frame corresponding to passive ranging cannot be reserved bits (that is, cannot be reserved). Similarly, in the trigger dependent common information field, one reserved bit may be used to indicate to a sensing device whether the frame is used for sensing or ranging, or two reserved bits may be used to indicate to a sensing device whether the frame is used for sensing, ranging, or both sensing and ranging. In other words, second indication information may be carried in the trigger dependent common information field or a user information field of the ranging sounding trigger frame for passive ranging. Similar to a non-proxy sensing mode, the measurement setup ID and the measurement instance ID that are used for sensing may alternatively be carried in a user information field of a sensing sounding trigger frame.

It should be noted that, in a sensing by proxy procedure, an AP requires another sensing non-AP STA to feed back a sensing result and/or a ranging result to the AP, and feeds back a result to an SBP initiator; and for a passive station PSTA, the AP requires another ranging non-AP STA to feed back a ranging result, and the AP broadcasts the received ranging result to the PSTA.

It should be noted that, in a result feedback phase, the AP may separately or simultaneously request a measurement result from the sensing device and the ranging device. In a process in which the AP requests a measurement result from the sensing device, the AP may use a sensing reporting trigger frame (Reporting trigger frame) to simultaneously or separately trigger the sensing non-AP STA to send a sensing measurement result and/or a ranging measurement result. A sequence of performing steps is not limited. In a process in which the AP requests a measurement result from the ranging device, the AP may use an existing 802.11 az ranging trigger LMR frame (TF Ranging LMR) to trigger the ranging device to feed back a ranging result, that is, an LMR.

Further, to implement functions in the method provided in this application, an apparatus or a device provided in this application may include a hardware structure and/or a software module, to implement the functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions. Module division in this application is an example, and is merely logical function division. There may be another division manner during actual implementation. In addition, functional modules in embodiments of this application may be integrated into one processor, or may exist alone physically, or two or more modules may be integrated into one module. The integrated module may be implemented in a form of hardware, or may be implemented in a form of software functional module.

FIG. 18 shows a measurement device 1800 according to this application. The measurement device 1800 is configured to implement the measurement method in the foregoing method embodiments. The device may alternatively be a chip system. The device 1800 includes a communication interface 1801. The communication interface may be, for example, a transceiver, an interface, a bus, a circuit, or an apparatus that can implement a sending and receiving function. The communication interface 1801 is configured to communicate with another device by using a transmission medium, so that an apparatus in the device 1800 can communicate with the another device. The device 1800 further includes at least one processor 1802. The communication interface 1801 is combined with the processor 1802, to implement the method in the foregoing method embodiments.

In an optional implementation:
the communication interface 1801 is configured to receive a sensing measurement result and a ranging measurement result from a second device;
the communication interface 1801 is configured to receive null data packets NDPs transmitted between the second device and a third device; and
the processor 1802 is configured to determine a first ranging measurement result of a first device based on the ranging measurement result and the NDPs.

Optionally, the communication interface 1801 is further configured to:
send a proxy request to the second device, where the proxy request is used to request the second device to perform sensing measurement and ranging measurement on behalf of the first device.

Optionally, the sensing measurement result includes channel state information CSI.

Optionally, the processor 1802 is specifically configured to:
determine the first ranging measurement result of the first device based on the ranging measurement result and receiving time of the NDPs.

Optionally, the sensing measurement result and the ranging measurement result are carried in a same frame.

Alternatively, the sensing measurement result and the ranging measurement result are carried in different frames.

Optionally, the ranging measurement result is sent through broadcast.

In another optional implementation:
send a sensing sounding trigger frame to a third device, where the sensing sounding trigger frame is used to trigger the third device to transmit a null data packet NDP, and the NDP is used to determine a sensing measurement result and a ranging measurement result, where
the ranging measurement result includes a second ranging measurement result and a third ranging measurement result, the second measurement result is obtained by a second device through measurement based on the transmitted NDP, and the third ranging result is obtained by the third device through measurement based on the transmitted NDP;
receive the third ranging measurement result and the sensing measurement result from the third device; and
send the sensing measurement result and the ranging measurement result to a first device, where the ranging measurement result is used to assist the first device in determining a first ranging measurement result of the first device.

Optionally, the communication interface 1801 is further configured to:
receive a proxy request from the first device, where the proxy request is used to request the second device to perform sensing measurement and ranging measurement on behalf of the first device.

Optionally, the sensing measurement result includes channel state information CSI.

Optionally, the sensing sounding trigger frame carries first indication information, the first indication information is carried in a second field of the sensing sounding trigger frame, and a value of the first indication information in the sensing sounding trigger frame is a first value.

Optionally, the sensing sounding trigger frame carries a measurement setup identifier used for sensing measurement and a measurement instance identifier used for sensing measurement.

The measurement setup identifier and the measurement instance identifier are carried in the second field of the sensing sounding trigger frame, and a length of the second field is 16 bits.

Optionally, the third device includes a ranging device.

Last 6 bits in the 16 bits are a sounding dialog token number (sounding dialog token number) field.

Optionally, the sensing measurement result and the ranging measurement result are carried in a same frame.

Alternatively, the sensing measurement result and the ranging measurement result are carried in different frames.

Optionally, the ranging measurement result is sent through broadcast.

It should be noted that, the device 1800 may further include at least one memory 1803, configured to store program instructions and/or data. In an implementation, the memory 1803 is coupled to the processor 1802. Couplings in this application are indirect couplings or communication connections between apparatuses, units, or modules, and may be electrical, mechanical, or in another form, and are used for information exchange between the apparatuses, the units, or the modules. The processor 1802 may cooperate with the memory 1803. The processor 1802 may execute the program instructions stored in the memory 1803. The at least one memory and the processor are integrated together.

A specific connection medium between the communication interface 1801, the processor 1802, and the memory 1803 is not limited in this application. In this application, in FIG. 18, the memory 1803, the processor 1802, and the communication interface 1801 are connected by using a bus 1804. The bus is represented by a bold line in FIG. 18. A connection manner of other components is merely an example for description, and is not limited thereto. The bus may be classified into an address bus, a data bus, a control bus, and the like. For ease of representation, only one bold line is used to represent the bus in FIG. 18, but this does not mean that there is only one bus or only one type of bus.

In this application, the processor may be a general-purpose processor, a digital signal processor, an application-specific integrated circuit, a field programmable gate array or another programmable logic device, a discrete gate or a transistor logic device, or a discrete hardware component, and may implement or perform methods, steps, and logical block diagrams that are disclosed in this application. The general-purpose processor may be a microprocessor or any conventional processor or the like. The steps of the method disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instruction or data structure and that can be accessed by a computer, but is not limited thereto. In this application, the memory may alternatively be a circuit or any other apparatus that can implement a storage function, and is configured to store program instructions and/or data.

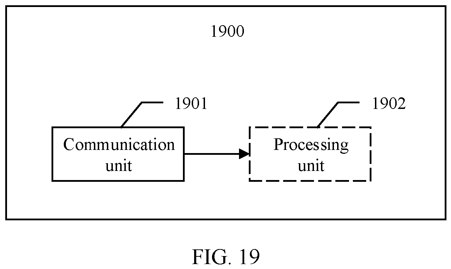

FIG. 19 is a diagram of a measurement apparatus according to an embodiment of this application. The measurement apparatus may include a communication unit 1901 and a processing unit 1902. The communication unit 1901 may include a sending unit and a receiving unit. The sending unit is configured to implement a sending function, the receiving unit is configured to implement a receiving function, and the communication unit 1901 may implement a sending function and/or a receiving function. The communication unit may also be described as a transceiver unit. The processing unit 1902 is configured to process data received or sent by the communication unit 1901.

In an optional implementation:
the communication unit 1901 is configured to receive a sensing measurement result and a ranging measurement result from a second device;
the communication unit 1901 is configured to receive null data packets NDPs transmitted between the second device and a third device; and
the processing unit 1902 is configured to determine a first ranging measurement result of a first device based on the ranging measurement result and the NDPs.

Optionally, the communication unit 1901 is further configured to:
send a proxy request to the second device, where the proxy request is used to request the second device to perform sensing measurement and ranging measurement on behalf of the first device.

Optionally, the sensing measurement result includes channel state information CSI.

Optionally, the processing unit 1902 is specifically configured to:
determine the first ranging measurement result of the first device based on the ranging measurement result and receiving time of the NDPs.

Optionally, the sensing measurement result and the ranging measurement result are carried in a same frame.

Alternatively, the sensing measurement result and the ranging measurement result are carried in different frames.

Optionally, the ranging measurement result is sent through broadcast.

In another optional implementation:
send a sensing sounding trigger frame to a third device, where the sensing sounding trigger frame is used to trigger the third device to transmit a null data packet NDP, and the NDP is used to determine a sensing measurement result and a ranging measurement result, where
the ranging measurement result includes a second ranging measurement result and a third ranging measurement result, the second measurement result is obtained by a second device through measurement based on the transmitted NDP, and the third ranging result is obtained by the third device through measurement based on the transmitted NDP;
receive the third ranging measurement result and the sensing measurement result from the third device; and
send the sensing measurement result and the ranging measurement result to a first device, where the ranging measurement result is used to assist the first device in determining a first ranging measurement result of the first device.

Optionally, the communication unit 1901 is further configured to:
receive a proxy request from the first device, where the proxy request is used to request the second device to perform sensing measurement and ranging measurement on behalf of the first device.

Optionally, the sensing measurement result includes channel state information CSI.

Optionally, the sensing sounding trigger frame carries first indication information, the first indication information is carried in a second field of the sensing sounding trigger frame, and a value of the first indication information in the sensing sounding trigger frame is a first value.

Optionally, the sensing sounding trigger frame carries a measurement setup identifier used for sensing measurement and a measurement instance identifier used for sensing measurement.

The measurement setup identifier and the measurement instance identifier are carried in the second field of the sensing sounding trigger frame, and a length of the second field is 16 bits.

Optionally, the third device includes a ranging device.

Last 6 bits in the 16 bits are a sounding dialog token number (sounding dialog token number) field.

Optionally, the sensing measurement result and the ranging measurement result are carried in a same frame.

Alternatively, the sensing measurement result and the ranging measurement result are carried in different frames.

Optionally, the ranging measurement result is sent through broadcast.

This application provides a communication system. The communication system includes the first device and the second device described in the foregoing method embodiments. In other words, based on the descriptions in the foregoing method embodiments, the communication system may implement, by using the first device and the second device, the measurement method described in this application.

This application provides a computer-readable storage medium. The computer-readable storage medium stores a program or instructions. When the program or the instructions are run on a computer, the computer is enabled to perform the measurement method described in the foregoing method embodiments.

This application provides a computer program product. The computer program product includes an instruction. When the instruction is run on a computer, the computer is enabled to perform the measurement method described in the foregoing method embodiments.

This application provides a chip or a chip system. The chip or the chip system includes at least one processor and an interface. The interface and the at least one processor are interconnected by using a line. The at least one processor is configured to run a computer program or instructions, to perform the measurement method described in the foregoing method embodiments.

The interface in the chip may be an input/output interface, a pin, a circuit, or the like.

The chip system may be a system on chip (system on chip, SOC), or may be a baseband chip, or the like. The baseband chip may include a processor, a channel encoder, a digital signal processor, a modem, an interface module, and the like.

In an implementation, the chip or the chip system described above in this application further includes at least one memory, and the at least one memory store an instruction. The memory may be a storage unit inside the chip, for example, a register or a cache, or may be a storage unit (for example, a read-only memory or a random access memory) of the chip.

All or some of the technical solutions provided in this application may be implemented by using software, hardware, firmware, or any combination thereof. When software is used to implement technical solutions, all or some of the technical solutions may be implemented in a form of computer program product. The computer program product includes one or more computer instructions. When the computer program instructions are loaded and executed on a computer, all or some of the procedures or functions according to this application are generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, on the premise of no logical contradiction, embodiments may be mutually referenced. For example, methods and/or terms between method embodiments may be mutually referenced. For example, functions and/or terms between apparatus embodiments may be mutually referenced. For example, functions and/or terms between apparatus embodiments and method embodiments may be mutually referenced.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A measurement method, comprising:
receiving, by a first device, a sensing measurement result and a ranging measurement result from a second device;
receiving, by the first device, null data packets NDPs transmitted between the second device and a third device; and
determining, by the first device, a first ranging measurement result of the first device based on the ranging measurement result and the NDPs.

2. The method according to claim 1, wherein the method further comprises:
sending, by the first device, a proxy request to the second device, wherein the proxy request is used to request the second device to perform sensing measurement and ranging measurement on behalf of the first device.

3. The method according to claim 1 or 2, wherein the sensing measurement result comprises channel state information CSI.

4. The method according to any one of claims 1 to 3, wherein the determining, by the first device, a first ranging measurement result of the first device based on the ranging measurement result and the NDPs comprises:
determining, by the first device, the first ranging measurement result of the first device based on the ranging measurement result and receiving time of the NDPs.

5. The method according to any one of claims 1 to 4, wherein
the sensing measurement result and the ranging measurement result are carried in a same frame; or
the sensing measurement result and the ranging measurement result are carried in different frames.

6. The method according to claim 5, wherein the ranging measurement result is sent through broadcast.

7. A measurement method, comprising:
sending, by a second device, a sensing sounding trigger frame to a third device, wherein the sensing sounding trigger frame is used to trigger the third device to transmit a null data packet NDP, and the NDP is used to determine a sensing measurement result and a ranging measurement result, wherein
the ranging measurement result comprises a second ranging measurement result and a third ranging measurement result, the second ranging measurement result is obtained by the second device through measurement based on the transmitted NDP, and the third ranging result is obtained by the third device through measurement based on the transmitted NDP;
receiving, by the second device, the third ranging measurement result and the sensing measurement result from the third device; and
sending, by the second device, the sensing measurement result and the ranging measurement result to a first device, wherein the ranging measurement result is used to assist the first device in determining a first ranging measurement result of the first device.

8. The method according to claim 7, wherein the method further comprises:
receiving, by the second device, a proxy request from the first device, wherein the proxy request is used to request the second device to perform sensing measurement and ranging measurement on behalf of the first device.

9. The method according to claim 7 or 8, wherein the sensing measurement result comprises channel state information CSI.

10. The method according to any one of claims 7 to 9, wherein the sensing sounding trigger frame carries first indication information, the first indication information is carried in a second field of the sensing sounding trigger frame, and a value of the first indication information in the sensing sounding trigger frame is a first value.

11. The method according to any one of claims 7 to 10, wherein the sensing sounding trigger frame carries a measurement setup identifier used for sensing measurement and a measurement instance identifier used for sensing measurement; and
the measurement setup identifier and the measurement instance identifier are carried in the second field of the sensing sounding trigger frame, and a length of the second field is 16 bits.

12. The method according to claim 11, wherein the third device comprises a ranging device; and
last 6 bits in the 16 bits are a sounding dialog token number (sounding dialog token number) field.

13. The method according to any one of claims 7 to 12, wherein
the sensing measurement result and the ranging measurement result are carried in a same frame; or
the sensing measurement result and the ranging measurement result are carried in different frames.

14. The method according to claim 13, wherein the ranging measurement result is sent through broadcast.

15. A measurement apparatus, comprising a memory, a transceiver, and a processor, wherein
the memory is configured to store program code; and
the transceiver and the processor are configured to execute the code in the memory, and specifically perform the following steps:
the transceiver is configured to receive a sensing measurement result and a ranging measurement result from a second device;
the transceiver is configured to receive null data packets NDPs transmitted between the second device and a third device; and
the processor is configured to determine a first ranging measurement result of the first device based on the ranging measurement result and the NDPs.

16. The apparatus according to claim 15, wherein the transceiver is configured to:
send a proxy request to the second device, wherein the proxy request is used to request the second device to perform sensing measurement and ranging measurement on behalf of the first device.

17. The apparatus according to claim 15 or 16, wherein the sensing measurement result comprises channel state information CSI.

18. The apparatus according to any one of claims 15 to 17, wherein the processor is specifically configured to:
determine the first ranging measurement result of the first device based on the ranging measurement result and receiving time of the NDPs.

19. The apparatus according to any one of claims 15 to 18, wherein
the sensing measurement result and the ranging measurement result are carried in a same frame; or
the sensing measurement result and the ranging measurement result are carried in different frames.

20. The apparatus according to claim 19, wherein the ranging measurement result is sent through broadcast.

21. A measurement apparatus, comprising a memory, a transceiver, and a processor, wherein
the memory is configured to store program code; and
the transceiver and the processor are configured to execute the code in the memory, and specifically perform the following steps:
sending a sensing sounding trigger frame to a third device, wherein the sensing sounding trigger frame is used to trigger the third device to transmit a null data packet NDP used to determine a sensing measurement result and a ranging measurement result, wherein
the ranging measurement result comprises a second ranging measurement result and a third ranging measurement result, the second ranging measurement result is obtained by the second device through measurement based on the transmitted NDP, and the third ranging result is obtained by the third device through measurement based on the transmitted NDP;
receiving the third ranging measurement result and the sensing measurement result from the third device; and
sending the sensing measurement result and the ranging measurement result to a first device, wherein the ranging measurement result is used to assist the first device in determining a first ranging measurement result of the first device.

22. The apparatus according to claim 21, wherein the transceiver is further configured to:
receive a proxy request from the first device, wherein the proxy request is used to request the second device to perform sensing measurement and ranging measurement on behalf of the first device.

23. The apparatus according to claim 21 or 22, wherein the sensing measurement result comprises channel state information CSI.

24. The apparatus according to any one of claims 21 to 23, wherein the sensing sounding trigger frame carries first indication information, the first indication information is carried in a second field of the sensing sounding trigger frame, and a value of the first indication information in the sensing sounding trigger frame is a first value.

25. The apparatus according to any one of claims 21 to 24, wherein the sensing sounding trigger frame carries a measurement setup identifier used for sensing measurement and a measurement instance identifier used for sensing measurement; and
the measurement setup identifier and the measurement instance identifier are carried in the second field of the sensing sounding trigger frame, and a length of the second field is 16 bits.

26. The apparatus according to claim 25, wherein the third device comprises a ranging device; and
last 6 bits in the 16 bits are a sounding dialog token number (sounding dialog token number) field.

27. The apparatus according to any one of claims 21 to 26, wherein
the sensing measurement result and the ranging measurement result are carried in a same frame; or
the sensing measurement result and the ranging measurement result are carried in different frames.

28. The apparatus according to claim 27, wherein the ranging measurement result is sent through broadcast.

29. A computer-readable storage medium, wherein the storage medium stores a computer program or instructions, and when the computer program or the instructions are executed by a computer, the method according to any one of claims 1 to 6 is implemented, or the method according to any one of claims 7 to 14 is implemented.
